# EUROPEAN PATENT SPECIFICATION

(11) **EP 4 152 187 B1**
(45) Date of publication and mention of the grant of the patent: **13.11.2024**
(21) Application number: 22205943.8
(22) Date of filing: 20.06.2014
(51) Int. Cl.: G06F 21/35, G06Q 20/32, G06Q 20/40, G06Q 20/42

(54) **SECURE PROVISIONING OF CREDENTIALS ON AN ELECTRONIC DEVICE**
SICHERE BEREITSTELLUNG VON BERECHTIGUNGSNACHWEISEN AUF EINER ELEKTRONISCHEN VORRICHTUNG
FOURNITURE SÉCURISÉE DE JUSTIFICATIFS D'IDENTITÉ SUR UN DISPOSITIF ÉLECTRONIQUE

(30) Priority: 26.08.2013 US 201361870134 P; 31.10.2013 US 201361898081 P; 27.11.2013 US 201314092205
(43) Date of publication of application: 22.03.2023
(62) Divisional of application: 14742020.2
(73) Proprietor: Apple Inc., Cupertino CA 95014 (US)
(72) Inventor: KHAN, Ahmer A., Cupertino, 95014 (US); HAGGERTY, David T., Cupertino, 95014 (US); DICKER, George R., Cupertino, 95014 (US); HAUCK, Jerroid V., Cupertino, 95014 (US); LINDE, Joakim, Cupertino, 95014 (US); ADLER, Mitchell D., Cupertino, 95014 (US); ROSEN, Zachary A., Cupertino, 95014 (US); VAID, Yousaf H., Cupertino, 95014 (US); SHARP, Christopher, Cupertino, 95014 (US)
(74) Representative: Bateman, Samuel Alec

(56) References cited:
- US-A1- 2008 249 939
- US-A1- 2011 078 081
- US-A1- 2013 111 571
- US-A1- 2013 212 248
- US-B1- 8 196 131

## Description

### Cross-Reference to Related Applications

This application claims the benefit of prior filed U.S. Provisional Patent Application No. 61/870,134 filed August 26, 2013, prior filed U.S. Provisional Patent Application No. 61/898,081 filed October 31, 2013, and prior filed U.S. Patent Application No. 14/092,205 filed November 27, 2013.

### Technical Field

This disclosure relates to the secure provisioning of credentials on an electronic device and, more particularly, to the secure provisioning of commerce credentials on an electronic device for use during near field communications.

### Background of the Disclosure

Portable electronic devices (e.g., cellular telephones) may be provided with near field communication ("NFC") components for enabling contactless proximity-based communications with another entity. Often times, these communications are associated with financial transactions or other secure data transactions that require the electronic device to access and share a commerce credential, such as a credit card credential or a public transportation ticket credential. However, data sources commonly used for determining whether a particular commerce credential ought to be provisioned on a particular electronic device are often limited.

US patent application US2013/212248 is further prior art.

### Summary of the Disclosure

The invention is defined by the appended claims.

This document describes systems, methods, and computer-readable media for securely provisioning credentials on an electronic device that is capable of near field communications and/or other wireless communications.

For example, a secure platform system may be in communication with an electronic device and a financial institution subsystem. The secure platform system may include a processor component, a memory component, and a communications component. The secure platform system may be configured to receive user account information from the electronic device, authenticate a user account with a commercial entity using the received user account information, detect a commerce credential associated with the authenticated user account, run a commercial entity fraud check on the detected commerce credential, commission the financial institution subsystem to run a financial entity fraud check on the detected commerce credential based on the results of the commercial entity fraud check, and facilitate provisioning of the detected commerce credential on the electronic device based on the results of the financial entity fraud check.

As another example, a method may include authenticating a user account with a commercial entity using user account information received from an electronic device, detecting at least one commerce credential associated with the authenticated user account, and running a commercial entity fraud risk analysis on each of the at least one detected commerce credential using data available to the commercial entity.

As yet another example, a secure platform system may be in communication with an electronic device and a financial institution subsystem. The secure platform system may include a processor component, a memory component, and a communications component. The secure platform system may be configured to receive user account information from the electronic device, authenticate a user account using the received user account information, detect a commerce credential associated with the authenticated user account, run a commercial entity fraud check on the detected commerce credential, and instruct the financial institution subsystem to run a financial entity fraud check on the detected commerce credential when the result of the commercial entity fraud check meets a particular standard.

As yet another example, an electronic device may include a contactless proximity-based communication component, another communication component, and a processor configured to communicate user account information to a commercial entity via the other communication component, receive account authentication information from the commercial entity via the other communication component based on the user account information, and, in response to the received account authentication information, transmit a request to the commercial entity via the other communication component for initiating a credential provisioning process.

As yet another example, a non-transitory computer-readable medium may include computer-readable instructions recorded thereon for authenticating a user account with a commercial entity using user account information received from an electronic device, detecting a commerce credential associated with the authenticated user account, and running a commercial entity fraud risk analysis on the detected commerce credential using data available to the commercial entity.

This Summary is provided merely to summarize some example embodiments, so as to provide a basic understanding of some aspects of the subject matter described in this document. Accordingly, it will be appreciated that the features described in this Summary are merely examples and should not be construed to narrow the scope or spirit of the subject matter described herein in any way. Other features, aspects, and advantages of the subject matter described herein will become apparent from the following Detailed Description, Figures, and Claims.

### Brief Description of the Drawings

The discussion below makes reference to the following drawings, in which like reference characters may refer to like parts throughout, and in which:
FIG. 1 is a schematic view of an illustrative system for securely provisioning credentials on an electronic device;
FIG. 2 is a more detailed schematic view of the electronic device of the system of FIG. 1;
FIG. 3 is a front view of the electronic device of FIGS. 1 and 2;
FIG. 4 is a more detailed schematic view of a secure mobile platform of the system of FIG. 1;
FIGS. 5-8 are flowcharts of illustrative processes for provisioning credentials; and
FIGS. 9A-9D are front views of screens of a graphical user interface of the electronic device of FIGS. 1-3 illustrating processes for provisioning credentials.

### Detailed Description of the Disclosure

The provisioning of a credential on an electronic device may include authenticating a user account for a commercial entity using the electronic device and then detecting that the credential is associated with the authenticated user account (e.g., an account that enables a user to purchase goods or services from the commercial entity using the associated credential). The credential may then be analyzed for fraud risk, not only by a financial entity responsible for the credential, but also by the commercial entity responsible for the authenticated user account with which the credential is associated. This may provide at least one additional layer of security while determining whether the credential ought to be provisioned on the electronic device.

Moreover, if the credential generates a positive fraud risk determination or a positive combination of fraud risk determinations based on the commercial entity fraud risk analysis and/or based on the financial entity fraud risk analysis, the credential may be at least partially provisioned on the electronic device without the user having to manually enter certain credential information or any credential information. This may provide a more seamless user experience for the user of the electronic device. For example, in order for a credential to be provisioned on an electronic device, a user of the electronic device may only interact with the device to authenticate his or her user account with the commercial entity. This may provide a simple and unobtrusive user interface, whereas other instances of provisioning a credential on an electronic device (e.g., the instance of provisioning a new credential not yet associated with an authenticated user account, or the instance of provisioning a credential that does not pass one or both of the financial entity fraud risk analysis and the commercial entity fraud risk analysis) may require additional user interaction to help bolster confidence that the credential ought to be provisioned (e.g., user responses to security questions and/or user receipt and acknowledgement of one-time passwords provided to the electronic device by the financial entity and/or by the commercial entity may be required in such instances).

One or more credentials associated with an authenticated user account may be analyzed for fraud risk by a commercial entity, then a user may select one or more credentials that pass such a commercial entity fraud risk analysis, and then a financial entity fraud risk analysis may be run on the one or more user-selected credentials. Alternatively, one or more credentials associated with an authenticated user account may be analyzed for fraud risk by a commercial entity, then a financial entity fraud risk analysis may be run on each of the one or more credentials that pass such a commercial entity fraud risk analysis, and then a user may select one or more credentials that pass such a financial entity fraud risk analysis. Alternatively, a user may select one or more credentials from a list of credentials associated with an authenticated user account, then each one of the user-selected credentials may be analyzed for fraud risk by a commercial entity, and then a financial entity fraud risk analysis may be run on each of the one or more credentials that pass such a commercial entity fraud risk analysis. The commercial entity and the financial entity may be distinct entities, and the commercial entity fraud risk analysis may be performed based on data accessible to the commercial entity without requiring specific information from the financial entity.

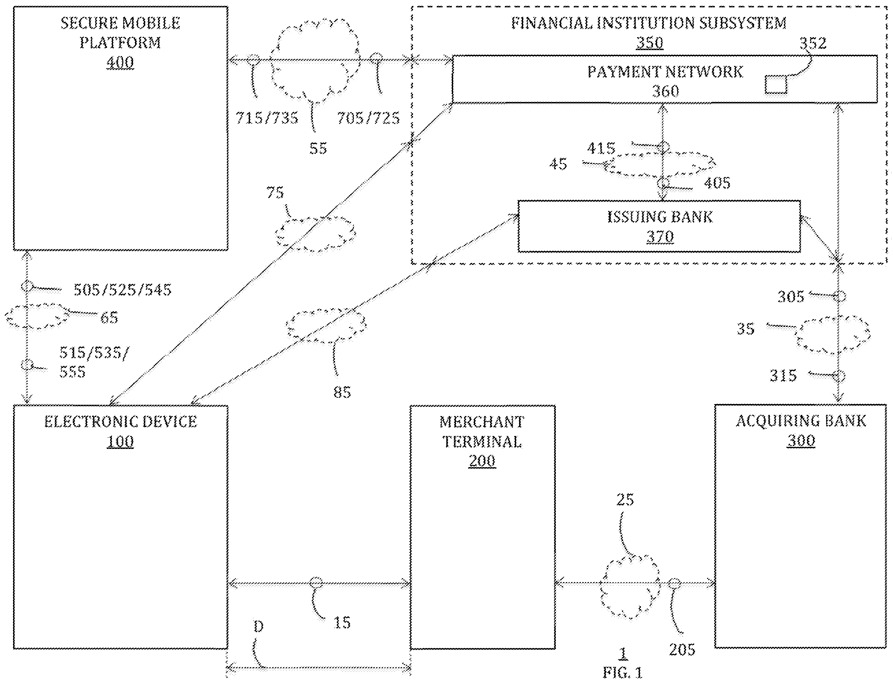

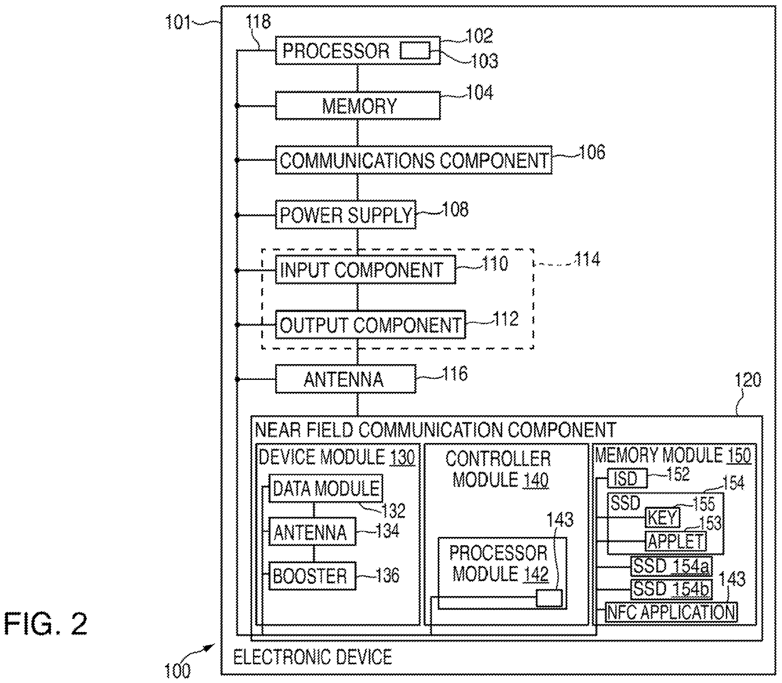

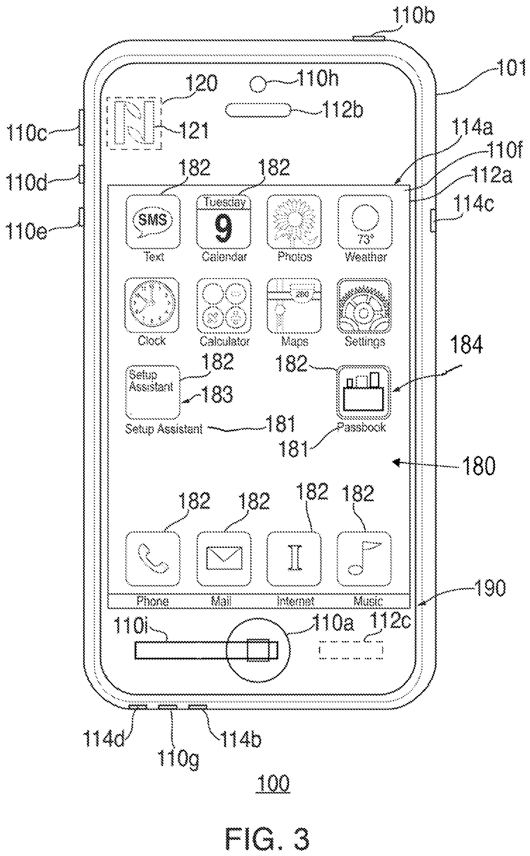

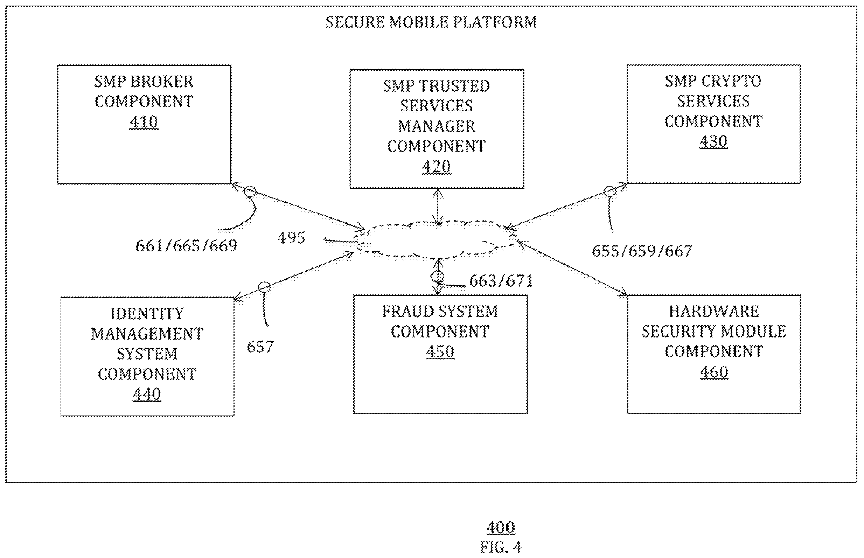

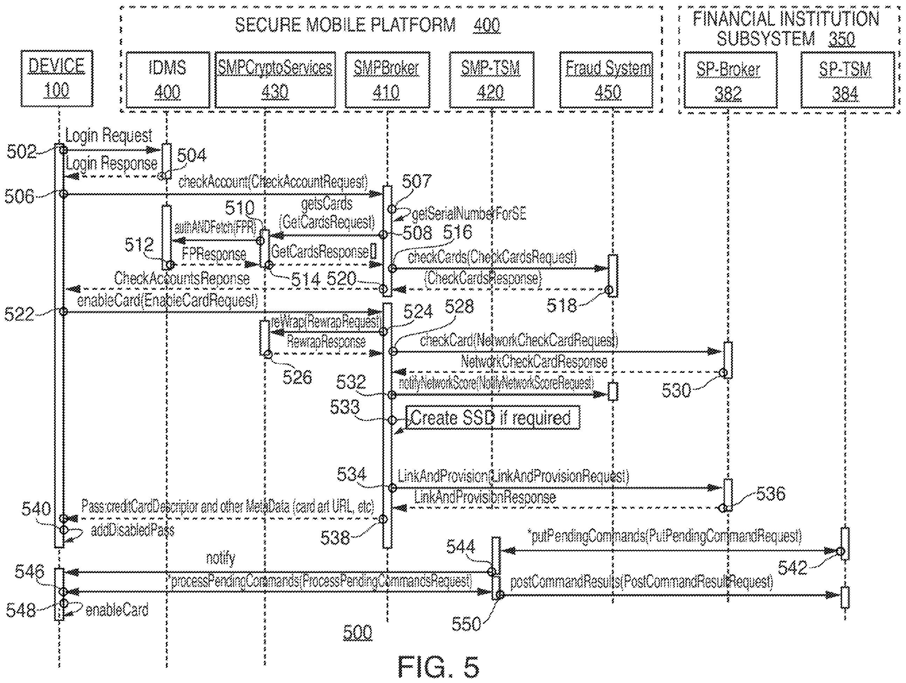

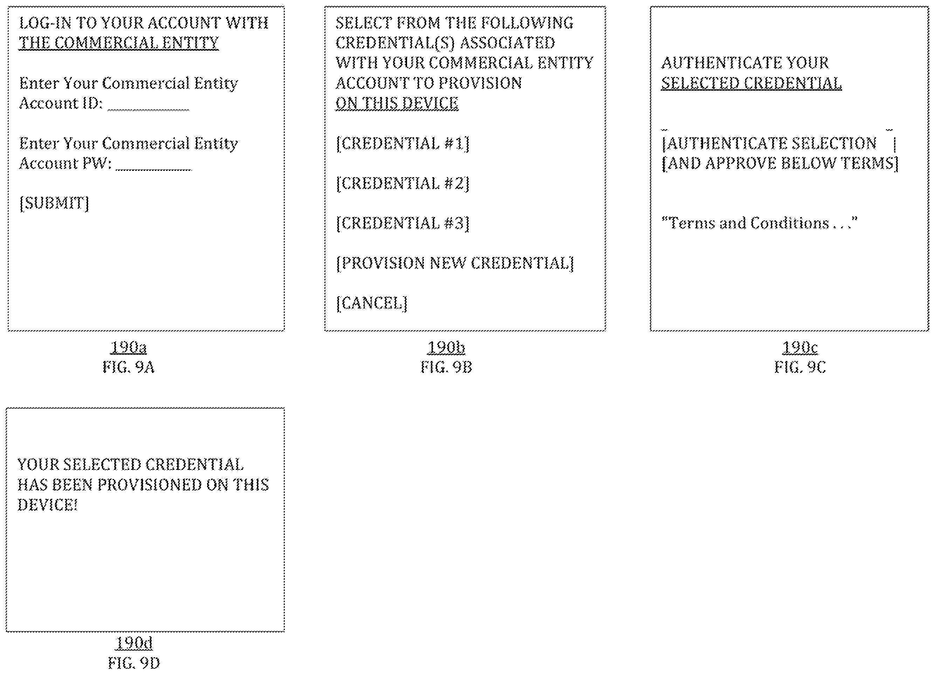

FIG. 1 shows a system 1 in which one or more credentials may be provisioned onto an electronic device 100 from a financial institution subsystem 350 in conjunction with a secure mobile platform subsystem 400, and in which such credentials may be used by electronic device 100 for conducting a commercial transaction with a merchant terminal 200 and an associated acquiring bank subsystem 300. FIGS. 2 and 3 show further details with respect to particular embodiments of electronic device 100 of system 1, while FIG. 4 shows further details with respect to particular embodiments of secure mobile platform subsystem 400 of system 1. FIGS. 5-8 are flowcharts of illustrative processes for provisioning credentials on electronic device 100 in the context of system 1, and FIGS. 9A-9D show example screens 190a-190d that may be representative of a graphical user interface of electronic device 100 during such credential provisioning.

### Description of FIG. 1, FIG. 2, and FIG. 3

FIG. 1 is a schematic view of an illustrative system 1 that may allow for the secure provisioning of credentials on an electronic device and/or that may allow for the use of such credentials in a financial transaction. For example, as shown in FIG. 1, system 1 may include an end-user electronic device 100 as well as a secure mobile platform subsystem 400 and a financial institution subsystem 350 for securely provisioning credentials on electronic device 100. Moreover, as shown in FIG. 1, system 1 may also include a merchant terminal 200 for receiving contactless proximity-based communications 15 (e.g., near field communications) from electronic device 100 based on such provisioned credentials, as well as an acquiring bank subsystem 300 that may utilize such contactless proximity-based communications 15 for completing a financial transaction with financial institution subsystem 350.

As shown in FIG. 2, and as described in more detail below, electronic device 100 may include a processor 102, memory 104, communications component 106, power supply 108, input component 110, output component 112, antenna 116, and near field communication ("NFC") component 120. Electronic device 100 may also include a bus 118 that may provide one or more wired or wireless communication links or paths for transferring data and/or power to, from, or between various other components of device 100. Electronic device 100 may also be provided with a housing 101 that may at least partially enclose one or more of the components of device 100 for protection from debris and other degrading forces external to device 100. Processor 102 may be used to run one or more applications, such as an application 103. Application 103 may include, but is not limited to, one or more operating system applications, firmware applications, media playback applications, media editing applications, NFC applications, biometric feature-processing applications, or any other suitable applications. For example, processor 102 may load application 103 as a user interface program to determine how instructions or data received via an input component 110 or other component of device 100 may manipulate the way in which information may be stored and/or provided to the user via an output component 112. NFC component 120 may be any suitable proximity-based communication mechanism that may enable any suitable contactless proximity-based transactions or communications 15 between electronic device 100 and terminal 200 (e.g., a merchant payment terminal). NFC component 120 may include any suitable modules for enabling contactless proximity-based communication 15 between electronic device 100 and terminal 200. As shown in FIG. 2, for example, NFC component 120 may include an NFC device module 130, an NFC controller module 140, and an NFC memory module 150. NFC device module 130 may include an NFC data module 132, an NFC antenna 134, and an NFC booster 136. NFC controller module 140 may include at least one NFC processor module 142 that may be used to run one or more applications, such as an NFC low power mode or wallet application 143 that may help dictate the function of NFC component 120. NFC memory module 150 may operate in conjunction with NFC device module 130 and/or NFC controller module 140 to allow for NFC communication 15 between electronic device 100 and terminal 200. NFC memory module 150 may be tamper resistant and may provide at least a portion of a secure element. For example, such a secure element may be configured to provide a tamper-resistant platform (e.g., as a single or multiple chip secure microcontroller) that may be capable of securely hosting applications and their confidential and cryptographic data (e.g., applet 153 and key 155) in accordance with rules and security requirements that may be set forth by a set of well-identified trusted authorities (e.g., an authority of financial institution subsystem and/or an industry standard, such as GlobalPlatform). NFC memory module 150 may include one or more of an issuer security domain ("ISD") 152 and a supplemental security domain ("SSD") 154 (e.g., a service provider security domain ("SPSD"), a trusted service manager security domain ("TSMSD"), etc.), which may be defined and managed by an NFC specification standard (e.g., GlobalPlatform). For example, ISD 152 may be a portion of NFC memory module 150 in which a trusted service manager ("TSM") or issuing financial institution may store keys and/or other suitable information for creating or otherwise provisioning one or more credentials (e.g., credentials associated with various credit cards, bank cards, gift cards, access cards, transit passes, etc.) on electronic device 100 (e.g., via communications component 106), for credential content management, and/or security domain management. A specific supplemental security domain ("SSD") 154 (e.g., one of SSDs 154-154b) may be associated with a specific credential (e.g., a specific credit card credential or a specific public transit card credential) that may provide specific privileges or payment rights to electronic device 100. Each SSD 154 may have its own manager key 155 for its own application or applet 153 that may need to be activated to enable a specific credential of that SSD 154 for use by NFC device module 130 as an NFC communication 15 between electronic device 100 and terminal 200.

Terminal 200 of FIG. 1 may include a reader for detecting, reading, or otherwise receiving NFC communication 15 from electronic device 100 (e.g., when electronic device 100 comes within a certain distance or proximity D of terminal 200). Accordingly, it is noted that NFC communication 15 between terminal 200 and electronic device 100 may occur wirelessly and, as such, may not require a clear "line of sight" between the respective devices. NFC device module 130 may be passive or active. When passive, NFC device module 130 may only be activated when within a response range D of a suitable reader of terminal 200. For instance, a reader of terminal 200 may emit a relatively low-power radio wave field that may be used to power an antenna utilized by NFC device module 130 (e.g., shared antenna 116 or NFC-specific antenna 134) and, thereby, enable that antenna to transmit suitable NFC communication information (e.g., credit card credential information) from NFC data module 132, via antenna 116 or antenna 134, to terminal 200 as NFC communication 15. When active, NFC device module 130 may incorporate or otherwise have access to a power source local to electronic device 100 (e.g., power supply 108) that may enable shared antenna 116 or NFC-specific antenna 134 to actively transmit NFC communication information (e.g., credit card credential information) from NFC data module 132, via antenna 116 or antenna 134, to terminal 200 as NFC communication 15, rather than reflect radio frequency signals, as in the case of a passive NFC device module 130.

As shown in FIG. 3, and as described below in more detail, a specific example of electronic device 100 may be a handheld electronic device, such as an iPhone^{™}, where housing 101 may allow access to various input components 110a-110i, various output components 112a-112c, and various I/O components 114a-114d through which device 100 and a user and/or an ambient environment may interface with each other. For example, a touch screen I/O component 114a may include a display output component 112a and an associated touch input component 110f, where display output component 112a may be used to display a visual or graphic user interface ("GUI") 180, which may allow a user to interact with electronic device 100. GUI 180 may include various layers, windows, screens, templates, elements, menus, and/or other components of a currently running application (e.g., application 103 and/or application 143) that may be displayed in all or some of the areas of display output component 112a. For example, as shown in FIG. 3, GUI 180 may be configured to display a first screen 190 with one or more graphical elements or icons 182 of GUI 180. When a specific icon 182 is selected, device 100 may be configured to open a new application associated with that icon 182 and display a corresponding screen of GUI 180 associated with that application. For example, when the specific icon 182 labeled with a "Setup Assistant" textual indicator 181 (i.e., specific icon 183) is selected, device 100 may launch or otherwise access a specific setup application and may display screens of a specific user interface that may include one or more tools or features for interacting with device 100 in a specific manner (see, e.g., FIGS. 9A-9D for specific examples of such displays of GUI 180 during a setup assistant application that may be used during provisioning of one or more credentials on electronic device 100).

Referring back to system 1 of FIG. 1, when NFC component 120 is appropriately enabled to communicate NFC communication 15 to terminal 200 with commerce credential data associated with an enabled credential of device 100 (e.g., commerce credential data associated with an enabled applet 153 of an SSD 154 of NFC component 120), acquiring bank subsystem 300 may utilize such commerce credential data of NFC communication 15 for completing a financial transaction with financial institution subsystem 350. For example, after a user of electronic device 100 has chosen a product for purchase and has selected a specific credential of device 100 to be used for payment, merchant terminal 200 may receive an appropriate NFC communication 15 indicative of commerce credential data for the selected credential. Merchant terminal 200 may be provided at any suitable merchant that may provide a product or service to a user of device 100 in response to device 100 providing payment credentials via communication 15 to terminal 200. Based on such a received NFC communication 15, terminal 200 may be configured to generate and transmit data 205 to acquiring bank subsystem 300 (e.g., via a communication path 25 between merchant terminal 200 and acquiring bank subsystem 300), where data 205 may include payment information and an authorization request that may be indicative of the user's commerce credential and the merchant's purchase price for the product or service. Also known as a payment processor or acquirer, acquiring bank subsystem 300 may be a banking partner of the merchant associated with merchant terminal 200, and acquiring bank subsystem 300 may be configured to work with financial institution subsystem 350 to approve and settle credential transactions attempted by electronic device 100 via NFC communication 15 with merchant terminal 200. Acquiring bank subsystem 300 may then forward the authorization request from data 205 to financial institution subsystem 350 as data 305 (e.g., via a communication path 35 between acquiring bank subsystem 300 and financial institution subsystem 350). One, some, or all components of acquiring bank subsystem 300 may be implemented using one or more processor components, which may be the same as or similar to processor component 102 of device 100, one or more memory components, which may be the same as or similar to memory component 104 of device 100, and/or one or more communications components, which may be the same as or similar to communications component 106 of device 100.

Financial institution subsystem 350 may include a payment network subsystem 360 (e.g., a payment card association or a credit card association) and/or an issuing bank subsystem 370. For example, issuing bank subsystem 370 may be a financial institution that assumes primary liability for a consumer's capacity to pay off debts they incur with a specific credential. Each specific credential may be associated with a specific payment card that may be electronically linked to an account or accounts of a particular user. Various types of payment cards are suitable, including credit cards, debit cards, charge cards, stored-value cards, fleet cards, gift cards, and the like. The commerce credential of a specific payment card may be provisioned on electronic device 100 by issuing bank subsystem 370 for use in an NFC communication 15 with merchant terminal 200. Each credential may be a specific brand of payment card that may be branded by a payment network subsystem 360. Payment network subsystem 360 may be a network of various issuing banks 370 and/or various acquiring banks that may process the use of payment cards (e.g., commerce credentials) of a specific brand.

Payment network subsystem 360 and issuing bank subsystem 370 may be a single entity or separate entities. For example, American Express may be both a payment network subsystem 360 and an issuing bank subsystem 370. In contrast, Visa and MasterCard may be payment network subsystems 360, and may work in cooperation with issuing bank subsystems 370, such as Chase, Wells Fargo, Bank of America, and the like. In the case of payment network subsystem 360 and issuing bank subsystem 370 being separate entities, payment network subsystem 360 may receive the authorization request of data 305 from acquiring bank subsystem 300 and may then forward the request to issuing bank subsystem 370 as data 405 (e.g., via a communication path 45 between payment network subsystem 360 and issuing bank subsystem 370). In the case of payment network subsystem 360 and issuing bank subsystem 370 being the same entity, acquiring bank subsystem 300 may submit the authorization request of data 305 directly to issuing bank subsystem 370. Furthermore, payment network subsystem 360 may respond to acquiring bank subsystem 300 on behalf of issuing bank subsystem 370 (e.g., according to conditions agreed upon between payment network subsystem 360 and issuing bank subsystem 370). By interfacing between acquiring bank subsystem 300 and issuing bank subsystem 370, payment network subsystem 360 may reduce the number of entities that each acquiring bank subsystem 300 and each issuing bank subsystem 370 may have to interact with directly. That is, to minimize direct integration points of financial institution subsystem 350, payment network subsystem 360 may act as an aggregator for various issuing banks 370 and/or various acquiring banks 300. Financial institution subsystem 350 may also include one or more acquiring banks, such as acquiring bank subsystem 300. For example, acquiring bank subsystem 300 may be the same entity as issuing bank subsystem 370. One, some, or all components of payment network subsystem 360 may be implemented using one or more processor components, which may be the same as or similar to processor component 102 of device 100, one or more memory components, which may be the same as or similar to memory component 104 of device 100, and/or one or more communications components, which may be the same as or similar to communications component 106 of device 100. One, some, or all components of issuing bank subsystem 370 may be implemented using one or more processor components, which may be the same as or similar to processor component 102 of device 100, one or more memory components, which may be the same as or similar to memory component 104 of device 100, and/or one or more communications components, which may be the same as or similar to communications component 106 of device 100.

When issuing bank subsystem 370 receives an authorization request (e.g., directly from acquiring bank subsystem 300 as data 305 or indirectly via payment network subsystem 360 as data 405), the payment information (e.g., commerce credential information of device 100) and the purchase amount included in the authorization request may be analyzed to determine if the account associated with the commerce credential has enough credit to cover the purchase amount. If sufficient funds are not present, issuing bank subsystem 370 may decline the requested transaction by transmitting a negative authorization response to acquiring bank subsystem 300. However, if sufficient funds are present, issuing bank subsystem 370 may approve the requested transaction by transmitting a positive authorization response to acquiring bank subsystem 300 and the financial transaction may be completed. Either type of authorization response may be provided by user financial subsystem 350 to acquiring bank subsystem 300 as authorization response data 315 (e.g., authorization response data 315 may be provided directly from issuing bank subsystem 370 to acquiring bank subsystem 300 via communication path 35, or authorization response data 315 may be provided from payment network subsystem 360 to acquiring bank subsystem 300 based on authorization response data 415 that may be provided to payment network subsystem 360 from issuing bank subsystem 370 via communication path 45).

To facilitate such financial transactions within system 1, one or more commerce credentials may be provisioned on electronic device 100. However, before provisioning a credential on device 100, a user of device 100 may attempt to prove that he or she is an authorized user of the credential and that the credential is in good standing. As shown in FIG. 1, secure mobile platform subsystem ("SMP") 400 may be provided as an intermediary between electronic device 100 and financial institution subsystem 350, where SMP 400 may be configured to provide a new layer of security and/or to provide a more seamless user experience when it is being determined whether or not to provision a credential from financial institution subsystem 350 on device 100. SMP 400 may be provided by a specific commercial entity that may offer various services to a user of device 100 via user-specific log-in information to a user-specific account with that commercial entity (e.g., via user-specific identification and password combinations). As just one example, SMP 400 may be provided by Apple Inc. of Cupertino, CA, which may also be a provider of various services to users of device 100 (e.g., the iTunes^{™} Store for selling/renting media to be played by device 100, the Apple App Store^{™} for selling/renting applications for use on device 100, the Apple iCloud^{™} Service for storing data from device 100, the Apple Online Store for buying various Apple products online, etc.), and which may also be a provider, manufacturer, and/or developer of device 100 itself (e.g., when device 100 is an iPod^{™}, iPad^{™}, iPhone^{™}, or the like).

The commercial entity that may provide SMP 400 may also provide different users with their own personalized accounts for using the services offered by that commercial entity. Each user account with the commercial entity may be associated with a specific personalized user ID and password that a user may use to log-in to their account with the commercial entity. Each user account with the commercial entity may also be associated with or have access to at least one commerce credential that can then be used by the user for purchasing services or products offered by the commercial entity. For example, each Apple ID user account may be associated with at least one credit card of a user associated with that Apple ID, such that the credit card may then be used by the user of that Apple ID account for procuring services from Apple's iTunes^{™} Store, the Apple App Store^{™}, the Apple iCloud^{™} Service, and the like. The commercial entity that may provide SMP 400 (e.g., Apple Inc.) may be distinct and independent from any financial entity of financial institution subsystem 350. For example, the commercial entity that may provide SMP 400 may be distinct and independent from any payment network subsystem 360 or issuing bank subsystem 370 that may furnish and manage any credit card or other commerce credential associated with a user account of the commercial entity. Similarly, the commercial entity that may provide SMP 400 may be distinct and independent from any payment network subsystem 360 or issuing bank subsystem 370 that may furnish and manage any commerce credential to be provisioned on user device 100. Such a commercial entity may leverage the known commerce credential information associated with each of its user accounts in order to more securely determine with SMP 400 whether a specific credential offered by financial institution subsystem 350 ought to be provisioned on a user device 100. Additionally or alternatively, such a commercial entity may leverage its ability to configure or control various components of device 100 (e.g., software and/or hardware components of device 100 when that commercial entity at least partially produces or manages device 100) in order to provide a more seamless user experience for a user of device 100 when he or she wants to provision a credential offered by financial institution subsystem 350 on user device 100. Details regarding an example of how SMP 400 may be implemented are provided below with reference to FIG. 4.

### Description of FIG. 4

As shown in FIG. 4, SMP 400 may include an SMP broker component 410, an SMP trusted services manager ("TSM") component 420, an SMP crypto services component 430, an identity management system ("IDMS") component 440, a fraud system component 450, and a hardware security module ("HSM") component 460. One, some, or all components of SMP 400 may be implemented using one or more processor components, which may be the same as or similar to processor component 102 of device 100, one or more memory components, which may be the same as or similar to memory component 104 of device 100, and/or one or more communications components, which may be the same as or similar to communications component 106 of device 100. One, some, or all components of SMP 400 may be managed by, owned by, at least partially controlled by, and/or otherwise provided by a single commercial entity (e.g., Apple Inc.) that may be distinct and independent from financial institution subsystem 350. The components of SMP 400 may interact with each other and collectively with both financial institution subsystem 350 and electronic device 100 for providing a new layer of security and/or for providing a more seamless user experience when it is being determined whether or not to provision a credential from financial institution subsystem 350 on to device 100. For example, SMP 400 may interact with electronic device 100 for enabling a user of device 100 to log-in to his or her account with the commercial entity that may be providing SMP 400. Once that user's account has been authenticated, SMP 400 may detect one or more commerce credentials associated with that user account and, then, SMP 400 may run a commercial entity fraud check on at least one detected commerce credential based on any data known to the commercial entity about the commerce credential and/or the user. A list of each detected credential that passes such a commercial entity fraud check may then be provided by SMP 400 to device 100 such that the user may choose at least one credential from that list to be provisioned on device 100. In response to receiving such a selection, SMP 400 may request that an appropriate component of financial institution subsystem 350 (e.g., a payment network subsystem 360 whose brand is associated with the selected credential) run a financial institution or network fraud check on the selected credential based on data known to that component of the financial institution subsystem. If the selected credential passes such a financial entity fraud check, SMP 400 may then interact with both financial institution subsystem 350 and electronic device 100 for provisioning the selected credential on device 100. By requiring user authentication through a user of device 100 logging-in to his or her account with the commercial entity, SMP 400 may gain certain accessibility to the functionality of device 100 that may enable a more seamless user experience during the credential provisioning process. Moreover, by leveraging data known by the commercial entity about a commerce credential associated with the user's commercial entity account, SMP 400 may enable a new layer of security for determining whether the credential may be provisioned on device 100.

SMP broker component 410 of SMP 400 may be configured to manage user authentication with a commercial entity user account. SMP broker component 410 may also be configured to manage the lifecycle and provisioning of credentials on device 100. SMP broker component 410 may be a primary end point that may control the user interface elements (e.g., elements of GUI 180) on device 100. An operating system or other application of device 100 (e.g., application 103 and/or application 143) may be configured to call specific application programming interfaces ("APIs") and SMP broker 410 may be configured to process requests of those APIs and respond with data that may derive the user interface of device 100 and/or respond with application protocol data units ("APDUs") that may communicate with the secure element of NFC component 120 (e.g., via a communication path 65 between SMP 400 and electronic device 100). Such APDUs may be received by SMP 400 from financial institution subsystem 350 via a trusted services manager ("TSM") of system 1 (e.g., a TSM of a communication path 55 between SMP 400 and financial institution subsystem 350). SMP TSM component 420 of SMP 400 may be configured to provide GlobalPlatform-based services that may be used to carry out credential provisioning operations on device 100 from financial institution subsystem 350. GlobalPlatform, or any other suitable secure channel protocol, may enable SMP TSM component 420 to properly communicate and/or provision sensitive account data between the secure element of device 100 and a TSM for secure data communication between SMP 400 and financial institution subsystem 350.

SMP TSM component 420 may be configured to use HSM component 460 to protect its keys and generate new keys. SMP crypto services component 430 of SMP 400 may be configured to provide key management and cryptography operations that may be required for user authentication and/or confidential data transmission between various components of system 1. SMP crypto services component 430 may utilize HSM component 460 for secure key storage and/or opaque cryptographic operations. A payment crypto service of SMP crypto services component 430 may be configured to interact with IDMS component 440 to retrieve on-file credit cards or other types of commerce credentials associated with user accounts of the commercial entity. Such a payment crypto service may be configured to be the only component of SMP 400 that may have clear text (i.e., non-hashed) information describing commerce credentials (e.g., credit card numbers) of its user accounts in memory. Commercial entity fraud system component 450 of SMP 400 may be configured to run a commercial entity fraud check on a commerce credential based on data known to the commercial entity about the commerce credential and/or the user (e.g., based on data associated with a user account with the commercial entity and/or any other suitable data that may be under the control of the commercial entity and/or any other suitable data that may not be under the control of financial institution subsystem 350). Commercial entity fraud system component 450 may be configured to determine a commercial entity fraud score for the credential based on various factors or thresholds. Any suitable communication protocol or combination of communication protocols may be used by SMP 400 to communicate data amongst the various components of SMP 400 (e.g., via at least one communications path 495 of FIG. 4) and/or to communicate data between SMP 400 and other components of system 1 (e.g., via communications path 55 and/or communications path 65 of FIG. 1).

### Description of FIG. 5 and FIGS. 9A-9D

FIG. 5 is a flowchart of an illustrative process 500 for provisioning a credential on an electronic device. Process 500 is shown being implemented by the various components of SMP 400 of FIG. 4 as well as electronic device 100 and financial institution subsystem 350. However, it is to be understood that process 500 may be implemented using any other suitable components or subsystems. Process 500 may provide a seamless user experience for provisioning a credential on device 100 with minimal user interaction with device 100 or any remote entity. Process 500 may begin at step 502, where a user may interact with electronic device 100 in order to log-in to the user's account with a commercial entity (e.g., a commercial entity that may provide SMP 400). For example, as shown in FIG. 3, a user may select "Setup Assistant" icon 183 of a specific screen 190 of GUI 180 using touch screen input component 110f of I/O component 114a, and this selection may be recognized by electronic device 100 as an initiation event for providing the user with an ability to log-in to a user account of the commercial entity. In response to such a selection of icon 183, GUI 180 may provide screen 190a of FIG. 9A, where electronic device 100 may prompt the user to log-in to his or her account by entering appropriate account identification (e.g., user name) and/or an appropriate account password. Once the user has entered and submitted his or her account log-in information (e.g., using screen 190a of a user interface provided by device 100), the entered log-in information may be transmitted by device 100 to SMP 400. For example, as shown in FIG. 5, step 502 of process 500 may include electronic device 100 transmitting user entered account log-in information to IDMS component 440 of SMP 400 as a "LogInRequest". Such user entered account log-in information may be transmitted by electronic device 100 as data 505 to SMP 400 via communications path 65 of FIG. 1. For example, communications component 106 of electronic device 100 may be configured to transmit data 505 using any suitable communications protocol over any suitable communications path 65.

Next, in response to receiving such user account log-in information, SMP 400 may attempt to authenticate the user with that log-in information. For example, at step 504 of process 500 of FIG. 5, IDMS component 440 may attempt to authenticate the user with the provided account log-in information (e.g., by comparing the received log-in information with all known authentic account information for the commercial entity) and, if successful, IDMS component 440 may generate and transmit an authentication "LogInResponse" to electronic device 100. Such an authentication response may include a single sign-on token that may grant device 100 access to and use of the authenticated user account for at least a specific amount of time (e.g., an amount of time that may be dictated by an expiration included in the "LogInResponse"). Such a response generated by SMP 400 may be transmitted by SMP 400 to electronic device 100 as data 515 via communications path 65 of FIG. 1. For example, communications component 106 of electronic device 100 may be configured to receive data 515 using any suitable communications protocol over any suitable communications path 65.

Next, in response to receiving such authentication response information from SMP 400, device 100 may automatically generate (e.g., without any required user interaction) a request for SMP 400 to determine whether any credentials associated with the authenticated user account may be provisioned on device 100. This may be done if device 100 is able to detect that it is capable of NFC communication (e.g., that it includes NFC component 120) and/or if device 100 detects that there are not yet any credentials provisioned on device 100. For example, at step 506 of process 500 of FIG. 5, device 100 may process the received authentication response information and may then generate and transmit a "CheckAccountRequest" to SMP 400. Such a request may include information regarding the authenticated account (e.g., the token from the authentication response information) as well as any other suitable information that may identify specific attributes of device 100 (e.g., the type of device 100, the type of NFC component 120 available to device 100, a serial number of device 100 or of a component of device 100, information about the secure element of NFC component 120, etc.) that SMP 400 may utilize to determine whether and/or how to provision a credential on device 100. Such a check account request generated by device 100 may be transmitted by device 100 to SMP 400 (e.g., to SMP broker component 410) as data 525 via communications path 65 of FIG. 1. For example, communications component 106 of electronic device 100 may be configured to transmit data 525 using any suitable communications protocol over any suitable communications path 65.

Next, in response to receiving such a check account request from device 100, SMP 400 may attempt to obtain information about the secure element of device 100. For example, at step 507 of process 500 of FIG. 5, SMP broker component 410 may obtain specific information about the secure element of device 100 (e.g., the serial number of NFC memory module 150 of NFC component 120), which may be determined through analysis of the received check account request information that was generated by device 100 at step 506. For example, SMP broker component 410 may determine the serial number of the secure element of electronic device 100 based on the serial number of device 100, which may be included in the "CheckAccountRequest" information provided by device 100 at step 506. In some embodiments, rather than passing information indicative of NFC component 120 directly from device 100 to SMP 400 (e.g., as part of "CheckAccountRequest" information provided by device 100 at step 506), device 100 may only share information more generally indicative of device 100 (e.g., an identifier uniquely indicative of device 100), for example, as a portion of "CheckAccountRequest" information provided by device 100 to SMP 400 at step 506, which may reduce the potential for fraudulent activity that may occur if "CheckAccountRequest" information provided by device 100 to SMP 400 at step 506 were to be intercepted. Instead, SMP 400 may include a look-up table or any other suitable data structure that may include a list of unique identifiers for various electronic devices 100 and an associated list of unique identifiers for various secure elements of various NFC components 120 incorporated into those various devices 100, where such a data structure may be securely provided to SMP 400 (e.g., by a manufacturer of the various devices 100, such as the commercial entity). By leveraging such a data structure with the unique identifier of device 100 that may be included in the "CheckAccountRequest" information provided to SMP 400 at step 506, SMP 400 may securely identify the unique identifier of a secure element of NFC component 120 of that electronic device 100 at step 507 (e.g., a serial number for the secure element ("SEID")).

Moreover, in response to receiving such a check account request from device 100, SMP 400 may attempt to retrieve information regarding each commerce credential that may be associated with the authenticated user account. For example, at step 508 of process 500 of FIG. 5, SMP broker component 410 may pull specific data from the received check account request (e.g., the token from the authentication response information of step 504 and/or the user log-in information of step 502) and/or data from any other accessible data source, and may generate and transmit a "GetCardsRequest" to SMP crypto services component 430 of SMP 400. Such a get credentials request may include the sign-on token and the log-in information, which may be required for accessing the credentials associated with the authenticated account from step 504. Such a request generated by SMP broker component 410 may be transmitted by SMP broker component 410 to SMP crypto services component 430 as data 655 via communications path 495 of FIG. 4 using any suitable communications protocol over any suitable communications path type. This get credentials request may be received by SMP crypto services component 430 and may then be passed on by SMP crypto services component 430 to IDMS component 440 at step 510 of process 500 as a "FetchPersonRequest" ("FPR"). Such a fetch person request for credentials may similarly include the sign-on token and the log-in information, which may be required for accessing the credentials associated with the authenticated user account from step 504. Such a request generated by SMP crypto services component 430 may be transmitted by SMP crypto services component 430 to IDMS component 440 as data 657 via communications path 495 of FIG. 4 using any suitable communications protocol over any suitable communications path type. Alternatively, in some perhaps less secure embodiments, steps 508 and 510 may be combined, where SMP broker 410 may send an appropriate request directly to IDMS 440.

In response to receiving such a fetch person request for credentials from SMP crypto services component 430, IDMS component 440 may attempt to retrieve information regarding each commerce credential that may be associated with the authenticated user account. For example, at step 512 of process 500 of FIG. 5, IDMS component 440 may pull specific data from the received fetch person request (e.g., the token data from the fetch person request, assuming it has not expired, and the user log-in information), access a list of known commerce credentials associated with the authenticated user account, and then generate and transmit a "FetchPersonResponse" ("FPResponse") back to SMP crypto services component 430 of SMP 400. Such a fetch person response for credentials may include, for each identified credential, a hashed-version of the number of the credential (e.g., a hashed listing that includes clearly only the last four digits of a payment card number, the expiration month and year, and/or any other suitable information) that may be required by SMP crypto services component 430 to identify the full details of the credential. In some embodiments, such a fetch person response may also include a ranking for each identified credential, where one credential may be ranked higher than another credential for provisioning purposes (e.g., as dictated by a user during his or her setting of account preferences when customizing his or her user account and the credentials associated therewith, where a user may wish to rank certain credentials over others for preferred or recommended provisioning on a device 100). Additionally or alternatively, such a fetch person response may also include an "ok to provision" indicator for each identified credential, where each credential may be configured "ok" or "not ok" for provisioning on an electronic device (e.g., as dictated by a user during his or her setting of account preferences when customizing his or her user account and the credentials associated therewith, where a user may wish to prevent certain credentials associated with a user account to be provisioned on electronic device 100). Such a fetch person response for credentials generated by IDMS component 440 may be transmitted by IDMS component 440 to SMP crypto services component 430 as data 659 via communications path 495 of FIG. 4 using any suitable communications protocol over any suitable communications path type.

In response to receiving such a fetch person response for credentials from IDMS component 440, SMP crypto services component 430 may attempt to retrieve even more information (e.g., more secure information) about each credential identified by the fetch person response. For example, at step 514 of process 500 of FIG. 5, SMP crypto services component 430 may pull specific data about each credential identified in the received fetch person response for credentials (e.g., the hashed-version of the number of each credential), access secure data more fully descriptive of each credential known by the commercial entity for its user accounts, and then generate and transmit a "GetCardsResponse" back to SMP broker component 410 of SMP 400 with the fully descriptive data for the credentials identified in the fetch person response. Such a get cards response may include, for each identified credential, any suitable credential identification information, such as credential network brand (e.g., Visa, MasterCard, American Express), credential card number (hashed or non-hashed), encrypted card verification value ("CVV"), an encrypted CVV certificate fingerprint, expiration month, expiration year, a score, an "is preferred" indicator or ranking, and an "ok to provision" indicator, and/or any other suitable credential information, that may be required by SMP broker 410 to request a commercial entity fraud check on the credential. Such a get cards response for credentials generated by SMP crypto services component 430 may be transmitted by SMP crypto services component 430 to SMP broker 410 as data 661 via communications path 495 of FIG. 4 using any suitable communications protocol over any suitable communications path type. Alternatively, in some perhaps less secure embodiments, steps 512 and 514 may be combined, where IDMS 440 may send an appropriate response directly to SMP broker 410.

In response to receiving such a get cards response for credentials from SMP crypto services component 430, SMP broker 410 may attempt to retrieve a commercial entity risk score for one, some, or all of the identified credentials that are associated with the authenticated commercial entity account of the user. For example, at step 516 of process 500 of FIG. 5, SMP broker component 410 may pull specific data from the received get cards response for credentials and may generate and transmit a "CheckCardsRequest" to fraud system component 450 of SMP 400. Such a check cards request may include an identification of device 100 (e.g., the serial number of device 100 as may be provided by device 100 with "CheckAccountRequest" information of step 506), an identification of the user of the authenticated commercial entity account (e.g., the log-in user name of the user's account as may have been entered by the user of device 100 with "LogInRequest" information of step 502), and/or an identification of one or more of the credentials associated with the authenticated user account (e.g., a hashed-version of the number of each credential as may be provided by "FetchPersonResponse" information of step 512 or "GetCardsResponse" of step 514), where some credentials associated with the request at step 508 may not be associated with the request of step 516 as some credentials may have been determined not worth being analyzed for fraud (e.g., certain credentials may be designated "not ok" to provision by a user as determined by "FetchPersonResponse" information of step 512 or "GetCardsResponse" of step 514). Such a check cards request generated by SMP broker component 410 may be transmitted by SMP broker component 410 to fraud system component 450 as data 663 via communications path 495 of FIG. 4 using any suitable communications protocol over any suitable communications path type.

In response to receiving such a check cards request from SMP broker component 410, fraud system component 450 may be configured to run a commercial entity fraud check on each identified commerce credential based on any data known to the commercial entity about the identified commerce credential and/or based on any data known to the commercial entity about the identified user and/or based on any data known to the commercial entity about the identified device. For example, at step 518 of process 500 of FIG. 5, fraud system component 450 may pull specific data from the received check cards request (e.g., the credential identification information, the electronic device identification information, and the authenticate user identification information), access one or more databases of information available to the commercial entity that may be useful for determining a fraud risk for a credential associated with an authenticated user account, and/or leverage that information to determine a commercial entity fraud score for each detected credential based on various factors or thresholds, and then fraud system component 450 may generate and transmit a "CheckCardsResponse" back to SMP broker 410 of SMP 400. Such a check cards response may include, for each credential associated with the authenticated user account, a description of the credential, a commercial entity fraud score for the credential, and/or a commercial entity fraud determination for the credential, which may be utilized by SMP broker 410 to determine whether or not the credential ought to be provisioned on device 100. Such a check cards response generated by fraud system component 450 may be transmitted by fraud system component 450 to SMP broker component 410 as data 665 via communications path 495 of FIG. 4 using any suitable communications protocol over any suitable communications path type.

Commercial entity fraud system component 450 of SMP 400 may be configured to run a commercial entity fraud check on each commerce credential of the authenticated account as identified in the "CheckCardsRequest" by leveraging data known to the commercial entity (e.g., based on data associated with the user of the authenticated account, based on data associated with device 100 (e.g., data that may be provided by device 100 at step 502 and/or step 506) and/or based on any other suitable data that may be under the control of the commercial entity and/or that may not be under the control of financial institution subsystem 350). Various factors or data points may be taken into account at step 518 including, but not limited to, the age of the authenticated user account, the length of time that the commerce credential has been associated with the authenticated user account, the percentage of the overall age of the authenticated user account during which the commerce credential has been associated with that account, the percentage of the overall age of the commerce credential during which the commerce credential has been associated with the authenticated user account, the amount of times the commerce credential has been used for payment by the authenticated user account, the duration of time since the commerce credential was last used for payment by the authenticated user account, the number of times the commerce credential has been associated with the authenticated user account (e.g., if a credential with a specific card number has been given new CVVs and new expiration dates multiple times, where each time the credential was re-associated with the authenticated user account), a determination as to whether the commerce credential was used to purchase device 100 (e.g., when device 100 was purchased from the commercial entity that may be providing SMP 400), a comparison of the current location of device 100 (e.g., using location information from communications component 106 that may be provided to SMP 400 at steps 502 and/or 506) with an address associated with the credential or user account or device 100 (e.g., a billing address of the credential, a shipping address of a purchase made with the authenticated user account, a location where device 100 was purchased (e.g., when device 100 was purchased from the commercial entity that may be providing SMP 400), etc.), a comparison of a known location where device 100 was purchased and a known location associated with the credential (e.g., higher risk may be determined for a device 100 bought in China with a credential issued in the United States as compared to a device 100 bought in China with a credential issued in China), whether or not the credential has been provisioned to any device other than device 100, the duration of time between when device 100 was purchased and when step 518 is occurring, the duration of time between when device 100 was first turned on and when step 518 is occurring, and the like. In some embodiments, such factors may be based on data associated with the use of the credential within an eco-system of the commercial entity that may be providing SMP 400, such as the use of the credential for purchases of products or services offered by the commercial entity with or without the use of the authenticated user account (e.g., such as the use of the credential for procurement of products or services on Apple's iTunes^{™} Store, the Apple App Store^{™}, the Apple iCloud^{™} Service, Apple's Online Store, and the like when the commercial entity providing SMP 400 is Apple Inc.). Additionally or alternatively, such factors may not be based on data associated with the use of the credential outside of the eco-system of the commercial entity that may be providing SMP 400 (e.g., the use of the credential for purchases of products or services not offered by the commercial entity, the detection of fraudulent activity of the credential by financial institution subsystem 350 when such activity is not related to the commercial entity, etc.), as such data may not be accessible to the commercial entity at step 518. Moreover, each factor or data point taken into account at step 518 for a particular credential may be used on its own or in combination with one or more additional factors or data points to determine a commercial entity fraud score for the credential and/or a commercial entity fraud determination for the credential (e.g., two factors may be averaged, one factor may be used if another factor is below a particular threshold, etc.).

Next, in response to receiving such a check cards response from fraud system component 450, SMP broker component 410 may identify whether any credentials passed the commercial entity fraud check and may then attempt to receive a user selection of at least one of such passing credentials for provisioning on device 100. For example, at step 520 of process 500 of FIG. 5, SMP broker component 410 may analyze the received check cards response (e.g., by determining if any credentials received a positive score and/or passed the commercial entity fraud check of step 518) and, if any passing credentials are detected, SMP broker component 410 may generate and transmit a "CheckAccountsResponse" to electronic device 100. Such a check accounts response may include any suitable description or identification of each passing credential (e.g., a hashed-version of the number of each passing credential as may be provided by "FetchPersonResponse" information of step 512 or "GetCardsResponse" information of step 514), as well as a crypto services certificate fingerprint, for example. Such a response generated by SMP broker 410 may be transmitted by SMP 400 to electronic device 100 as data 535 via communications path 65 of FIG. 1. For example, communications component 106 of electronic device 100 may be configured to receive data 535 using any suitable communications protocol over any suitable communications path 65.

Next, in response to receiving such a check accounts response from SMP 400, device 100 may automatically generate a user interface that may prompt the user to select at least one of the credentials that passed the commercial entity fraud check for provisioning on device 100. For example, as shown in FIG. 9B, GUI 180 may provide screen 190b, where electronic device 100 may prompt the user to select at least one of the credentials that passed the commercial entity fraud check for provisioning on device 100, such as by providing one or more selectable options that may describe the various passing credentials (e.g., based on information provided by the check accounts response from SMP 400). Screen 190b may also allow a user to select none of the passing credentials by providing a "CANCEL" option. Alternatively or additionally, screen 190b may provide a "PROVISION NEW CREDENTIAL" option, which may be selected by the user if he or she wishes to provision a credential other than those indicated by the check accounts response received by device 100 from SMP 400, as described below in more detail. If and when the user selects an option associated with provisioning one of the credentials approved by the commercial entity fraud check (e.g., using screen 190b of a user interface provided by device 100), the selection may be transmitted by device 100 to SMP 400. For example, as shown in FIG. 5, step 522 of process 500 may include electronic device 100 transmitting a user selection of a passing credential to SMP broker 410 of SMP 400 as an "EnableCardRequest". Such a user selected enable card request may include any suitable information indicative of the selected credential as well as any other suitable information that may be useful to SMP 400 for enabling the provisioning of the selected credential on device 100 (e.g., an SSD identifier, which may be indicative of an available SSD 154 of NFC component 120 of device 100 that may be able to receive such a provisioned credential). Additionally or alternatively, such a user selected enable card request (e.g., "EnableCardRequest" of step 522) may include any suitable security information associated with the selected credential that may be used by financial institution subsystem 350 for provisioning that credential onto device 100 (e.g., the CVV for the selected credential, which may be entered by the user of device 100). For example, as shown in FIG. 9C, GUI 180 may provide screen 190c (e.g., after a user selection on screen 190b), where electronic device 100 may prompt the user to authenticate the selected credential in one or more ways (e.g., by entering security information, such as the CVV of the selected credential and/or any other suitable security information that may be required by system 1 (e.g., by financial institution subsystem 350) for provisioning the selected credential on device 100). Moreover, as shown in FIG. 9C, screen 190c of GUI 180 may also prompt the user to consider and accept various terms and conditions that may be applicable for provisioning the selected credential on device 100. Such a user selected enable card request may be transmitted by electronic device 100 as data 545 to SMP 400 via communications path 65 of FIG. 1. For example, communications component 106 of electronic device 100 may be configured to transmit data 545 using any suitable communications protocol over any suitable communications path 65.

Next, in response to receiving such a user selected enable card request from device 100, SMP 400 may attempt to retrieve encrypted information regarding the selected credential that may be suitable for communication by SMP 400 to financial institution subsystem 350. For example, at step 524 of process 500 of FIG. 5, SMP broker component 410 may pull specific data from the received enable card request (e.g., information indicative of the selected credential, the additional security information for the selected credential (e.g., the user provided CVV), etc.), as well as a security key for a communication path between SMP 400 and financial institution subsystem 350 (e.g., a primary network key for communication path 55 of FIG. 1), and SMP broker component 410 may then generate and transmit a "RewrapRequest" to SMP crypto services component 430 of SMP 400. Such a rewrap request may include the information indicative of the selected credential, the additional security information for the selected credential (e.g., the user provided CVV), as well as the security key for communication path 55, which may be required for generating credential information suitable for communication by SMP 400 over communication path 55 to financial institution subsystem 350. Such a rewrap request generated by SMP broker component 410 may be transmitted by SMP broker component 410 to SMP crypto services component 430 as data 667 via communications path 495 of FIG. 4 using any suitable communications protocol over any suitable communications path type.

In response to receiving such a rewrap request, SMP crypto services component 430 may generate data for the selected credential that may be suitable for communication by SMP 400 over communication path 55 to financial institution subsystem 350. For example, at step 526 of process 500 of FIG. 5, SMP crypto services component 430 may pull specific data about the selected credential and the network identified in the received rewrap request (e.g., the hashed-version of the credential and its CVV, as well as the security key for communication path 55), access secure data more fully descriptive of the selected credential known by the commercial entity for its user accounts, and then may generate and transmit a "RewrapResponse" back to SMP broker component 410 of SMP 400. Such a rewrap response may include secure data for the selected credential encoded with the security key in a suitable manner for communication by SMP 400 over communication path 55 to financial institution subsystem 350. Such a rewrap response generated by SMP crypto services component 430 may be transmitted by SMP crypto services component 430 to SMP broker 410 as data 669 via communications path 495 of FIG. 4 using any suitable communications protocol over any suitable communications path type.

In response to receiving such a rewrap response from SMP crypto services component 430, SMP broker 410 may attempt to retrieve a financial institution risk score for the selected credential. For example, at step 528 of process 500 of FIG. 5, SMP broker component 410 may pull specific data from the rewrap response of step 526 as well as data from the check cards response of step 518 and/or the enable card request of step 522, and may then generate and transmit a "NetworkCheckCardRequest" to financial institution subsystem 350 of system 1 (e.g., to an SP-Broker 382 of financial institution subsystem 350). Such a network check card request may include an identification of the selected credential (e.g., the secure data for the selected credential encoded with the security key in a suitable manner for communication by SMP 400 over communication path 55 to financial institution subsystem 350, as may be provided by the "RewrapResponse" of step 526). Additionally, such a network check card request may include a commercial entity risk score for the selected credential (e.g., the commercial entity fraud score for the selected credential and/or a commercial entity fraud determination for the selected credential, as may be provided by the "CheckCardsResponse" of step 518), which may be leveraged in any suitable way by financial institution subsystem 350 during a financial entity fraud risk analysis. Additionally or alternatively, such a network check card request may include any other suitable information that may be useful for enabling the provisioning of the credential on device 100 (e.g., an SSD identifier, which may be indicative of an available SSD 154 of NFC component 120 of device 100 that may be able to receive a provisioned credential, as may be provided by the "EnableCardRequest" of step 522). Such a network check card request generated by SMP broker component 410 may then be transmitted by SMP 400 to financial institution subsystem 350 as data 705 via communications path 55 of FIG. 1 using any suitable communications protocol over any suitable communications path type (e.g., via a TSM of communications path 55).

In response to receiving such a network check card request from SMP 400, financial institution subsystem 350 may be configured to run a financial entity fraud check on the selected commerce credential based on any data known to financial institution subsystem 350 or a component thereof that may receive the network check card request (e.g., a specific payment network subsystem 360 that may be associated with the brand of the selected credential). For example, at step 530 of process 500 of FIG. 5, financial institution subsystem 350 may pull specific data from the received network check card request (e.g., the credential identification information for the selected credential and, in some embodiments, the commercial entity fraud score for the selected credential), access one or more databases of information available to financial institution subsystem 350 that may be useful for determining a financial entity fraud risk for the selected credential, leverage that information to determine a financial entity fraud score for the selected credential based on various factors or thresholds, and then financial institution subsystem 350 (e.g., SP-Broker 382 of financial institution subsystem 350) may generate and transmit a "NetworkCheckCardResponse" back to SMP broker 410 of SMP 400. Such a network check card response may include a financial entity fraud score for the selected credential and/or a financial entity fraud determination for the selected credential, which may be utilized by SMP broker 410 and/or financial institution subsystem 350 to determine whether or not the credential ought to be provisioned on device 100. Such a financial entity fraud score or determination may be generated in any suitable manner using any suitable data available to the financial entity (e.g., payment network subsystem 360), including, but not limited to, reviewing whether the balance on the account associated with the selected credential is within an acceptable range, whether any suspicious charges have been applied to the account, or any other suitable consideration that a financial institution may make when determining a fraud risk of a particular credential. Such a network check card response of step 530 may also include a network score token that may be associated with the financial entity fraud check for the selected credential. For example, this network score token, which may later be re-presented to financial institution subsystem 350 (e.g., by SMP 400), can be any suitable data that may provide financial institution subsystem 350 with proof that it has authorized the credential for provisioning (e.g., due to the passing score of the financial entity fraud check serving as the basis for this network check card response). In some embodiments, this network score token data may be a network-signed and encrypted version of the identification number of the selected credential. Such a network check card response generated by financial institution subsystem 350 may be transmitted by financial institution subsystem 350 (e.g., by an appropriate payment network subsystem 360) to SMP 400 (e.g., to SMP broker component 410) as data 715 via communications path 55 of FIG. 1 using any suitable communications protocol over any suitable communications path type (e.g., via a TSM of communications path 55).

Next, in response to receiving such a network check card response from financial institution subsystem 350 (e.g., specifically a network check card response that may be indicative of the selected credential passing the financial entity fraud check), SMP broker component 410 may notify fraud system component 450 of the financial entity fraud score indicated by the network check card response. For example, at step 532 of process 500 of FIG. 5, SMP broker component 410 may analyze the received network check card response (e.g., for determining the financial entity fraud score for the selected credential and/or the financial entity fraud determination for the selected credential) and then SMP broker component 410 may generate and transmit a "NotifyNetworkScoreRequest" to fraud system component 450. Such a network score request notification may include any suitable description or identification of the selected credential (e.g., a hashed-version of the number of the credential as may be provided by "FetchPersonResponse" information of step 512 or "GetCardsResponse" of step 514) as well as information indicative of the financial entity fraud score for the selected credential and/or the financial entity fraud determination for the selected credential (e.g., as may be provided by "NetworkCheckCardResponse" of step 530), where such a financial entity score for a particular credential may be leveraged in any suitable way by SMP 400. Such a network score request notification generated by SMP broker 410 may be transmitted by SMP broker 410 to fraud system component 450 as data 671 via communications path 495 of FIG. 4 using any suitable communications protocol over any suitable communications path type.

In response to receiving such a network check card response from financial institution subsystem 350 (e.g., specifically a network check card response that may be indicative of a user-selected credential passing the financial entity fraud check), an SSD may be created by SMP 400 (e.g., by SMP broker component 410) at step 533 (e.g., an identifier for an SSD of device 100 (e.g., an SSD 154 of NFC component 120) into which the credential is to be provisioned), which may be at least partially determined based on the secure element information determined at step 507 and/or based on an SSD identifier that may be provided by the "EnableCardRequest" of step 522. Next, after step 533, SMP 400 (e.g., SMP broker component 410) may send a request to financial institution subsystem 350 for the provisioning of the selected and passing credential on device 100. For example, at step 534 of process 500 of FIG. 5, SMP broker component 410 may analyze the received network check card response (e.g., for determining the financial entity fraud score for the selected credential and/or the financial entity fraud determination for the selected credential) and then SMP broker component 410 may generate and transmit a "LinkAndProvisionRequest" to financial institution subsystem 350 (e.g., to SP-Broker 382 of financial institution subsystem 350). In some embodiments, such a link and provision request may only be generated and transmitted if SMP 400 determines that the selected credential ought to be provisioned on device 100. For example, such a determination may be made after step 530, by comparing the information indicative of the financial entity fraud score for the selected credential and/or the financial entity fraud determination for the selected credential (e.g., as may be provided by "NetworkCheckCardResponse" of step 530) with information indicative of the commercial entity fraud score for the selected credential and/or the commercial entity fraud determination for the selected credential (e.g., as may be provided by "CheckCardsResponse" of step 518). That is, in some embodiments, a determination to proceed with provisioning a selected credential on device 100 may be made only after analyzing both the results of the financial entity fraud test of step 530 and the commercial entity fraud test of step 518. For example, a combination of both scores may have to meet a certain threshold and/or each score may have to meet its own particular threshold in order for a credential to be provisioned on device 100 according to process 500. If such a determination is made after step 530, such a link and provision request of step 534 may include any suitable data that financial institution subsystem 350 may use to begin provisioning the selected credential on device 100, such as data indicative of the selected credential (e.g., secure data for the selected credential encoded with the security key in a suitable manner for communication by SMP 400 over communication path 55 to financial institution subsystem 350, as may be provided by "RewrapResponse" of step 526) and/or data indicative of a previous determination by financial institution subsystem 350 that the selected credential passes the financial entity fraud check (e.g., the network score token that may have been provided by "NetworkCheckCardResponse" of step 530). Such a link and provision request generated by SMP broker component 410 may then be transmitted by SMP 400 to financial institution subsystem 350 as data 725 via communications path 55 of FIG. 1 using any suitable communications protocol over any suitable communications path type (e.g., via a TSM of communications path 55). Such a link and provision request generated and transmitted by SMP 400 may also include an identification of the SSD of device 100 into which the credential is to be provisioned (e.g., as determined by step 533).

In response to receiving such a link and provision request from SMP 400, financial institution subsystem 350 (e.g., SP-Broker 382) may be configured to generate a descriptor of the selected credential to be provisioned, as well as visual artwork and other metadata that may be provided on device 100 for aiding user interaction with the credential once provisioned. For example, at step 536 of process 500 of FIG. 5, financial institution subsystem 350 may pull specific data from the received link and provision request (e.g., the credential identification information for the selected credential and, in some embodiments, the network score token), access one or more databases of information available to financial institution subsystem 350 that may be useful for generating one or more descriptors and/or various types of metadata that may aid any eventual user interaction with the credential once provisioned on device 100, and then financial institution subsystem 350 may generate and transmit a "LinkAndProvisionResponse" back to SMP broker 410 of SMP 400. Such a link and provision response may include a descriptor of the credential to be provisioned and any suitable metadata that ought to be provided on device 100 for aiding user interaction with the credential to be provisioned. For example, such link and provision response data may include some or all suitable data that may enable device 100 to make the credential visually appear as available to device 100, such as visual logos/icons and other user discernible data associated with the credential that may be provided to the user (e.g., when the specific icon 182 labeled with a "Passbook" textual indicator 181 (i.e., specific icon 184) of FIG. 3 is selected, device 100 may launch or otherwise access a specific passbook or wallet application and may display screens of a specific user interface that may include one or more visual descriptors of the credential). Such a link and provision response generated by financial institution subsystem 350 may be transmitted by financial institution subsystem 350 (e.g., by an appropriate payment network subsystem 360) to SMP 400 (e.g., to SMP broker component 410) as data 735 via communications path 55 of FIG. 1 using any suitable communications protocol over any suitable communications path type (e.g., via a TSM of communications path 55).

In some embodiments, system 1 and/or process 500 may be configured to provision a virtual credential on device 100 rather than the actual credential that may be associated with the user's commercial entity account and that may be used for the fraud risk analysis of step 518 and/or step 530. For example, once it is determined that a credential is to be provisioned on device 100, it may be requested (e.g., by financial institution subsystem 350, by SMP 400, and/or by a user of device 100) that a virtual credential be generated, linked to the actual credential, and provisioned on device 100 instead of the actual credential. That is, SMP broker component 410 may generate and transmit a "LinkAndProvisionRequest" to financial institution subsystem 350 at step 534 that may also include a specific instruction for financial institution subsystem 350 to link and provision a virtual credential (e.g., a device primary account number ("D-PAN")) with the selected actual credential (i.e., a funding primary account number ("F-PAN") originally issued by the issuing bank), and, accordingly, financial institution subsystem 350 may generate and transmit a "LinkAndProvisionResponse" back to SMP broker 410 at step 536 that may include a descriptor of the virtual credential (e.g., the D-PAN) to be provisioned and any suitable metadata that ought to be provided on device 100 for aiding user interaction with the virtual credential to be provisioned. Such linking and provisioning of a virtual credential with an actual credential may be performed by any suitable component of financial institution subsystem 350. For example, a payment network subsystem 360 (e.g., a particular payment network subsystem 360 that may be associated with the brand of the actual credential selected during steps 522-530) may define and store a virtual-linking table 352 (e.g., as shown in FIG, 1) that may create associations between the actual credential and a virtual credential, such that anytime a virtual credential is utilized by device 100 for a financial transaction with merchant terminal 200 (e.g., after being provisioned on device 100), payment network subsystem 360 may receive an authorization request indicative of that virtual credential (e.g., as data 305) and may conduct an analysis of that authorization request in light of the actual credential associated with the virtual credential as determined by table 352. By provisioning a virtual credential on device 100 rather than an actual credential, financial institution subsystem 350 may be configured to limit the fraudulent activity that may result when the virtual credential is intercepted by an unauthorized user (e.g., by an NFC communication 15 signal stealer), as payment network subsystem 360 may only be configured to utilize table 352 for linking the virtual credential to the actual credential during certain transactions (e.g., during NFC transactions and not online transactions or other transactions that may allow credential information to be manually entered by a user).

In some embodiments, system 1 may be configured such that it may be automatically determined to proceed with provisioning the selected credential on device 100, as the actual credential or as a virtual credential, when the financial entity fraud score of step 530 is a positive one (e.g., given that the commercial entity fraud score would also had to have been a positive one in order to even perform step 530 of process 500 according to some embodiments). In such embodiments, step 530 may include financial institution subsystem 350 being configured to generate and transmit a "NetworkCheckCardResponse" back to SMP broker 410 of SMP 400 that also includes the desired data of the "LinkAndProvisionResponse" described above with respect to step 536, such that step 530 may obviate the need for steps 534 and 536.

Next, in response to receiving a link and provision response (e.g., either at step 536 or step 530), SMP 400 (e.g., SMP broker component 410) may pass some or all of the information contained in that link and provision response to device 100 in order to at least partially prepare it for having a credential provisioned thereon. For example, at step 538 of process 500 of FIG. 5, SMP broker component 410 may analyze the received link and provision response and may then generate and transmit a "Pass" to electronic device 100. Such a pass may include any suitable description or identification of the credential to be provisioned (e.g., a hashed-version of the credential number, virtual or actual, as well as any associated metadata, all of which may be provided by "LinkAndProvisionResponse" information of step 530 or step 536). Such a pass may also include information associated with the particular SSD 154 of device 100 that may have the credential provisioned thereon (e.g., an SSD identifier, as may be provided by the "EnableCardRequest" of step 522, and/or as created at step 533, which may be at least partially determined based on the secure element information determined at step 507 and/or based on an SSD identifier that may be provided by the "EnableCardRequest" of step 522). Such a pass generated by SMP broker 410 may be transmitted by SMP 400 to electronic device 100 as data 555 via communications path 65 of FIG. 1. For example, communications component 106 of electronic device 100 may be configured to receive data 555 using any suitable communications protocol over any suitable communications path 65.

Next, in response to receiving such a pass from SMP 400, device 100 may automatically generate and add a disabled pass to an SSD 154 of NFC memory module 150 (e.g., without any required user interaction). For example, at step 540 of process 500 of FIG. 5, device 100 may process the received pass and may then generate and add a "DisabledPass" to an SSD 154 of NFC memory module 150 (e.g., to a particular SSD 154 that may be identified by the received pass). At step 540, the pass data from step 538 may enable device 100 to make the credential visually appear as available to device 100, such as visual logos/icons and other user discernible data associated with the credential that may be provided to the user (e.g., via a Passbook or Wallet application of device 100) and credential descriptor information. At least partially concurrently with step 536, financial institution subsystem 350 may initiate generation and transmission of putPending commands for SMP 400 and, thus, device 100. For example, at step 542 of process 500 of FIG. 5, financial institution subsystem 350 (e.g., SP-TSM 384 of financial institution subsystem 350) may generate and transmit one or more "putPendingCommands" to SMP 400 (e.g., to SMP-TSM component 420 of SMP 400). In some embodiments, such putPendingCommands may include the primary account number (e.g., D-PAN or F-PAN, hashed or not), an SSD identifier, and/or an SSD counter. Then, in response to receiving such putPendingCommands, SMP 400 (e.g., SMP-TSM component 420) may issue a notification (i.e., "notify") to device 100 at step 544 of process 500 of FIG. 5 that may include one or more persoScripts or GlobalPlatform APDU scripts (e.g., any scripts, any rotate keys (e.g., if necessary), and any other suitable administrative elements that may be used to provision a usable PAN on device 100). At step 548, device 100 may complete any of the received scripts from the notification of step 544 for enabling the credential (e.g., for toggling the credential from disabled/pending activation to enabled/active for use). In some embodiments, device 100 may be configured to generate and transmit "processPendingCommands" to SMP 400 (e.g., SMP-TSM component 420) at step 546 and SMP 400 may be configured to process such "processPendingCommands" and then generate and transmit appropriate "postCommandResults" to financial institution subsystem 350 (e.g., SP-TSM 384) at step 550 (e.g., to indicate to financial institution subsystem 350 that the provisioning of the credential has been completed). Therefore, in some embodiments, the state of the secure element on device 100 (e.g., whether the credential's PAN is enabled for use) may be updated at step 548 asynchronously with (e.g., later than) the status of the credential as it may visually appear available to a user (e.g., in a Passbook or Wallet application) at step 540. This may enable the credential to appear ready for use to a user of device 100 before it is actually ready for use, thereby providing a more desirable user experience. Once the selected credential is at least disabled on device 100 (e.g., as either the actual credential or a linked virtual credential) at step 540 and/or enabled at step 548, device 100 may automatically generate a user interface that may inform the user that the credential has been successfully provisioned. For example, as shown in FIG. 9D, GUI 180 may provide screen 190d, where electronic device 100 may provide a message to the user indicative of the completed provisioning of the selected credential. In some embodiments, such a screen 190d may be provided at step 540 and/or at step 548.

Therefore, process 500 may enable at least one credential associated with an authenticated user account to be analyzed for fraud risk, not only by a financial entity responsible for the credential, but also by a commercial entity responsible for the authenticated user account. This may provide at least one additional layer of security while determining whether a credential ought to be provisioned. Moreover, process 500 may enable a credential that generates a positive fraud risk determination or a positive combination of fraud risk determinations to be at least partially provisioned on an electronic device without the user having to manually enter any credential information. This may provide a more seamless user experience for device 100. For example, process 500 may only require that a user of device 100 authenticate his or her user account with a commercial entity that may be providing at least a portion of a secure mobile platform (e.g. at step 502 with respect to FIG. 9A) and, in some embodiments, select from among many possible credentials for provisioning (e.g., at step 522 with respect to FIG. 9B). This may provide a simple and unobtrusive user interface, whereas other instances of provisioning a credential on device 100 (e.g., the instance of provisioning a new credential not yet associated with an authenticated user account, as may be selected by a user of device 100 with respect to FIG. 9B, or the instance of provisioning a credential that does not pass one or both of the financial entity fraud check and the commercial entity fraud check) may require additional user interaction to help bolster system confidence that the credential ought to be provisioned (e.g., user responses to security questions whose answers are known by financial institution subsystem 350 (e.g., "what is your mother's maiden name" or "what is the name of your first pet") and/or user receipt and acknowledgement of one-time passwords provided to device 100 by financial institution subsystem 350 and/or SMP 400 may be required in such instances (e.g., via communication path 75 and/or communication path 85)). In such instances where a user may attempt to provision a new credential not yet associated with an authenticated user account, as may be selected by a user of device 100 with respect to FIG. 9B, once selected, such a new credential may be analyzed for risk according to process 500 (e.g., via a commercial entity fraud risk analysis and/or via a financial entity fraud risk analysis).

It is understood that the steps shown in process 500 of FIG. 5 are merely illustrative and that existing steps may be modified or omitted, additional steps may be added, and the order of certain steps may be altered. For example, a user may select from all credentials associated with his or her authenticated user account (e.g., at step 522) before a commercial entity fraud check is performed on any credential (e.g., at step 518) so that the commercial entity fraud check may be performed only for the credential selected by the user and not on all credentials associated with the user's authenticated user account.

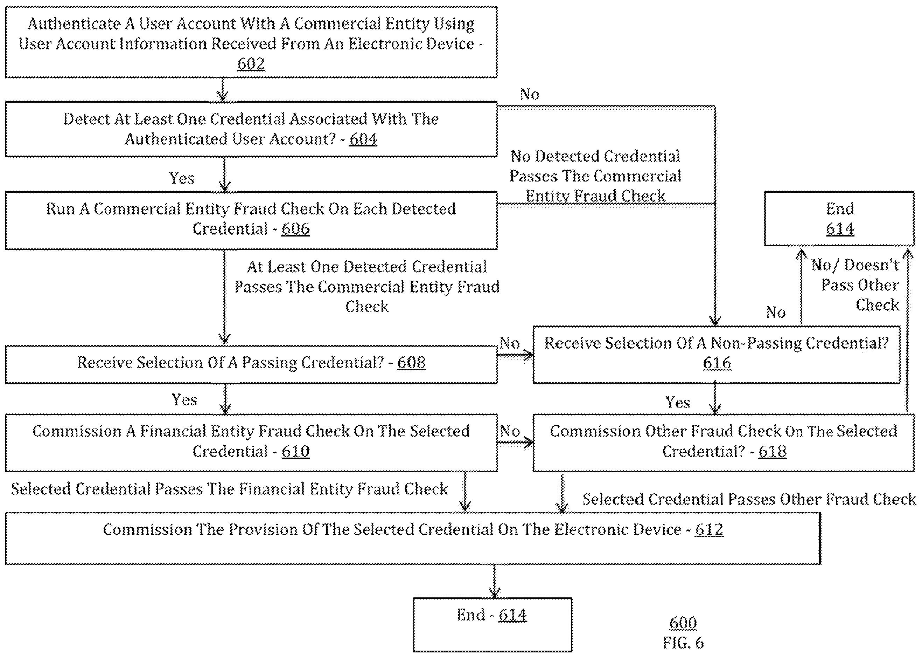

### Description of FIG. 6

FIG. 6 is a flowchart of an illustrative process 600 for provisioning a credential on an electronic device. At step 602, process 600 may authenticate a user account with a commercial entity using user account information received from an electronic device. For example, SMP 400 may be configured to authenticate a user account with a commercial entity using user account information received from electronic device 100 (e.g., using user entered account log-in data 505 that may be transmitted by electronic device 100 to SMP 400 via communications path 65 of FIG. 1). Next, at step 604, at least one credential associated with the authenticated user account may be attempted to be detected. For example, SMP 400 may detect at least one credential associated with the authenticated user account (e.g., IDMS component 440 of SMP 400 may generate data 659 indicative of at least one credential associated with the authenticated user account). If at least one credential is detected at step 604, process 600 may proceed to step 606, where a commercial entity fraud check may be run on each detected credential. For example, SMP 400 may run a commercial entity fraud check on each detected credential (e.g., fraud system component 450 of SMP 400 may generate data 665 indicative of a commercial entity fraud check score or determination of each detected credential). If at least one credential passes the commercial entity fraud check at step 606, a selection of one of the passing credentials may be received at step 608. For example, SMP 400 may receive a user selection of a passing credential from electronic device 100 (e.g., selection data 525 may be transmitted by device 100 to SMP 400 (e.g., to SMP broker component 410) via communications path 65 of FIG. 1). If a selection of a passing credential is received at step 608, process 600 may proceed to step 610, where a financial entity fraud check may be commissioned for the selected credential. For example, SMP 400 may commission a financial entity fraud check on a selected credential (e.g., SMP broker component 410 of SMP 400 may generate and transmit data 705 to financial institution subsystem 350 via communications path 55 of FIG. 1 using any suitable communications protocol over any suitable communications path type (e.g., via a TSM of communications path 55) for commissioning a financial entity fraud check on a selected credential). If the selected credential passes the financial entity fraud check at step 610 (e.g., a determination that may be made in conjunction with a score from the commercial entity fraud check for the selected credential), process 600 may proceed to step 612, where the provisioning of the selected credential on the electronic device may be commissioned. For example, SMP 400 may commission the provisioning of a credential on an SSD 154 of NFC component 120 of electronic device 100, either directly from financial institution subsystem 350 to device 100 or at least partially via SMP 400. Process 600 may then proceed from step 612 to step 614 and end. However, process 600 may proceed to step 616 when no credential associated with the authenticated user account is detected at step 604, when no detected credential passes the corporate entity fraud check at step 606, or when no selection of a passing credential is received at step 608. At step 616, a selection of a non-passing credential may be received. For example, SMP 400 may receive from electronic device 100 a user selection of another credential not associated with the user account (e.g., a selection of the "PROVISION NEW CREDENTIAL" option of screen 190b of FIG. 9B). If no selection of a non-passing credential is received at step 616 (e.g., a selection of the "CANCEL" option of screen 190b of FIG. 9B is received), process 600 may proceed to step 614 and end. However, if a selection of a non-passing credential is received at step 616, process 600 may proceed to step 618, where another fraud check may be commissioned for the selected credential. For example, a commercial entity fraud check and/or a financial entity fraud check may be commissioned for the selected credential. Alternatively or additionally, for example, SMP 400 may commission another fraud check that may require additional user interaction with device 100 to help bolster the confidence of system 1 that the selected non-passing credential ought to be provisioned (e.g., user responses to security questions and/or user receipt and acknowledgement of one-time passwords provided to device 100 by financial institution subsystem 350 and/or SMP 400 may be required in such instances). If no additional fraud check is commissioned or the selected non-passing credential does not pass the other fraud check at step 618, process 600 may proceed to step 614 and end. However, if the selected non-passing credential does pass the other fraud check at step 618, process 600 may proceed to step 612, where the provisioning of the selected credential on the electronic device may be commissioned. Process 600 may then proceed from step 612 to step 614 and end.

It is understood that the steps shown in process 600 of FIG. 6 are merely illustrative and that existing steps may be modified or omitted, additional steps may be added, and the order of certain steps may be altered.

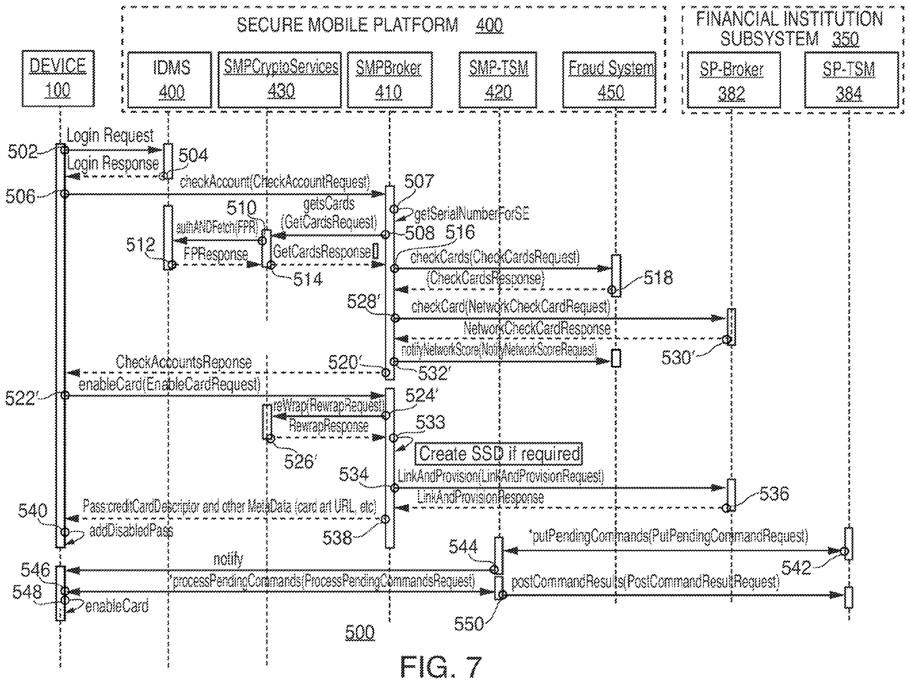

### Description of FIG. 7

In some embodiments, both a commercial entity fraud check and a financial entity fraud check may be run for some or all of the credentials associated with an authenticated user account before a user may be provided with a list of passing credentials for selection, such that the user may only be able to select from a list of credentials deemed to meet risk analysis standards of both types of fraud check rather than from a list of credentials only analyzed by a commercial entity fraud check. For example, as shown in FIG. 7, a process 500' may be similar to process 500 of FIG. 5 but with a financial entity fraud check being run before receiving a credential selection by a user. Steps 502-518 of process 500' may be substantially similar or identical to steps 502-518 of process 500 described above. However, as shown in FIG. 7, after step 518, in response to receiving a check cards response from fraud system component 450, SMP broker 410 may attempt to retrieve a financial institution risk score for at least the credentials that passed the commercial entity fraud check of steps 516 and 518 and/or for all of the credentials that underwent the commercial entity fraud check of steps 516 and 518. For example, at step 528' of process 500' of FIG. 7, SMP broker component 410 may pull specific data from the check cards response of step 518 and/or the check cards request of step 516, and may then generate and transmit a "NetworkCheckCardRequest" to financial institution subsystem 350 of system 1 (e.g., to an SP-Broker 382 of financial institution subsystem 350). Such a network check card request may include an identification of the one or more credentials to undergo a financial entity fraud check (e.g., at least the credentials that passed the commercial entity fraud check of steps 516 and 518 and/or for all of the credentials that underwent the commercial entity fraud check of steps 516 and 518). Additionally, such a network check card request of step 528' of process 500' may include a commercial entity risk score for the one or more credentials to undergo a financial entity fraud check (e.g., the commercial entity fraud score for the one or more credentials to undergo a financial entity fraud check and/or a commercial entity fraud determination for the one or more credentials to undergo a financial entity fraud check, as may be provided by the "CheckCardsResponse" of step 518). Additionally or alternatively, such a network check card request of step 528' of process 500' may include any other suitable information that may be useful for enabling the provisioning of a credential on device 100. Such a network check card request generated by SMP broker component 410 may then be transmitted by SMP 400 to financial institution subsystem 350 as data 705 via communications path 55 of FIG. 1 using any suitable communications protocol over any suitable communications path type (e.g., via a TSM of communications path 55).

In response to receiving such a network check card request from SMP 400, financial institution subsystem 350 may be configured to run a financial entity fraud check on the one or more credentials to undergo a financial entity fraud check based on any data known to financial institution subsystem 350 or a component thereof that may receive the network check card request (e.g., a specific payment network subsystem 360 that may be associated with the brand of each credential). For example, at step 530' of process 500' of FIG. 7, financial institution subsystem 350 may pull specific data from the received network check card request (e.g., the credential identification information for each of the one or more credentials to undergo a financial entity fraud check and, in some embodiments, the commercial entity fraud score for each credential), access one or more databases of information available to financial institution subsystem 350 that may be useful for determining a financial entity fraud risk for each credential, leverage that information to determine a financial entity fraud score for each credential based on various factors or thresholds, and then financial institution subsystem 350 (e.g., SP-Broker 382 of financial institution subsystem 350) may generate and transmit a "NetworkCheckCardResponse" back to SMP broker 410 of SMP 400. Such a network check card response may include a financial entity fraud score for each of the one or more credentials to undergo a financial entity fraud check and/or a financial entity fraud determination for each of the one or more credentials to undergo a financial entity fraud check, which may be utilized by SMP broker 410 and/or financial institution subsystem 350 to determine whether or not each credential ought to be provisioned on device 100. Such a financial entity fraud score or determination may be generated in any suitable manner using any suitable data available to the financial entity (e.g., payment network subsystem 360), including, but not limited to, reviewing whether the balance on the account associated with the credential is within an acceptable range, whether any suspicious charges have been applied to the account, or any other suitable consideration that a financial institution may make when determining a fraud risk of a particular credential. Such a network check card response of step 530' may also include a network score token that may be associated with the financial entity fraud check for the one or more credentials. For example, this network score token, which may later be re-presented to financial institution subsystem 350 (e.g., by SMP 400), can be any suitable data that may provide financial institution subsystem 350 with proof that it has authorized the credential for provisioning (e.g., due to the passing score of the financial entity fraud check serving as the basis for this network check card response). Such a network check card response generated by financial institution subsystem 350 may be transmitted by financial institution subsystem 350 (e.g., by an appropriate payment network subsystem 360) to SMP 400 (e.g., to SMP broker component 410) as data 715 via communications path 55 of FIG. 1 using any suitable communications protocol over any suitable communications path type (e.g., via a TSM of communications path 55).

Next, in response to receiving such a network check card response from financial institution subsystem 350 (e.g., specifically a network check card response that may be indicative of at least one credential passing the financial entity fraud check), SMP broker component 410 may notify fraud system component 450 of the financial entity fraud score indicated by the network check card response. For example, at step 532' of process 500' of FIG. 7, SMP broker component 410 may analyze the received network check card response (e.g., for determining the financial entity fraud score for a particular credential and/or the financial entity fraud determination for a particular credential) and then SMP broker component 410 may generate and transmit a "NotifyNetworkScoreRequest" to fraud system component 450. Such a network score request notification may include any suitable description or identification of the selected credential (e.g., a hashed-version of the number of the credential as may be provided by "FetchPersonResponse" information of step 512 or "GetCardsResponse" of step 514) as well as information indicative of the financial entity fraud score for the credential and/or the financial entity fraud determination for the credential (e.g., as may be provided by "NetworkCheckCardResponse" of step 530'). Such a network score request notification generated by SMP broker 410 may be transmitted by SMP broker 410 to fraud system component 450 as data 671 via communications path 495 of FIG. 4 using any suitable communications protocol over any suitable communications path type.

Next, in response to receiving such a network check cards response from financial institution subsystem 350, SMP broker component 410 may identify whether any credentials passed both the commercial entity fraud check (e.g., of steps 516/518) and the financial entity fraud check (e.g., of steps 528`/530`) and may then attempt to receive a user selection of at least one of such passing credentials for provisioning on device 100. For example, at step 520' of process 500' of FIG. 7, SMP broker component 410 may analyze the received network check cards response (e.g., by determining if any credentials received a positive score and/or passed the financial entity fraud check of step 528') and, if any passing credentials are detected, SMP broker component 410 may generate and transmit a "CheckAccountsResponse" to electronic device 100. Such a check accounts response may include any suitable description or identification of each passing credential (e.g., a hashed-version of the number of each passing credential as may be provided by "FetchPersonResponse" information of step 512 or "GetCardsResponse" information of step 514), as well as a crypto services certificate fingerprint, for example. Such a response generated by SMP broker 410 may be transmitted by SMP 400 to electronic device 100 as data 535 via communications path 65 of FIG. 1. For example, communications component 106 of electronic device 100 may be configured to receive data 535 using any suitable communications protocol over any suitable communications path 65.

Next, in response to receiving such a check accounts response from SMP 400, device 100 may automatically generate a user interface that may prompt the user to select at least one of the credentials that passed the commercial entity fraud check and the financial entity fraud check for provisioning on device 100. For example, as shown in FIG. 9B, GUI 180 may provide screen 190b, where electronic device 100 may prompt the user to select at least one of the credentials that passed both the commercial entity fraud check and the financial entity fraud check for provisioning on device 100, such as by providing one or more selectable options that may describe the various passing credentials (e.g., based on information provided by the network check accounts response from SMP 400). Screen 190b may also allow a user to select none of the passing credentials by providing a "CANCEL" option. Alternatively or additionally, screen 190b may provide a "PROVISION NEW CREDENTIAL" option, which may be selected by the user if he or she wishes to provision a credential other than those indicated by the network check accounts response received by device 100 from SMP 400, as described above. If and when the user selects an option associated with provisioning one of the credentials approved by the commercial entity fraud check and the financial entity fraud check (e.g., using screen 190b of a user interface provided by device 100), the selection may be transmitted by device 100 to SMP 400. For example, as shown in FIG. 7, step 522' of process 500' may include electronic device 100 transmitting a user selection of a passing credential to SMP broker 410 of SMP 400 as an "EnableCardRequest". Such a user selected enable card request may include any suitable information indicative of the selected credential as well as any other suitable information that may be useful to SMP 400 for enabling the provisioning of the selected credential on device 100 (e.g., an SSD identifier, which may be indicative of an available SSD 154 of NFC component 120 of device 100 that may be able to receive such a provisioned credential). Additionally or alternatively, such a user selected enable card request (e.g., "EnableCardRequest" of step 522') may include any suitable security information associated with the selected credential that may be used by financial institution subsystem 350 for provisioning that credential onto device 100 (e.g., the CVV for the selected credential, which may be entered by the user of device 100). For example, as shown in FIG. 9C, GUI 180 may provide screen 190c (e.g., after a user selection on screen 190b), where electronic device 100 may prompt the user to authenticate the selected credential in one or more ways (e.g., by entering security information, such as the CVV of the selected credential and/or any other suitable security information that may be required by system 1 (e.g., by financial institution subsystem 350) for provisioning the selected credential on device 100). Moreover, as shown in FIG. 9C, screen 190c of GUI 180 may also prompt the user to consider and accept various terms and conditions that may be applicable for provisioning the selected credential on device 100. Such a user selected enable card request may be transmitted by electronic device 100 as data 545 to SMP 400 via communications path 65 of FIG. 1. For example, communications component 106 of electronic device 100 may be configured to transmit data 545 using any suitable communications protocol over any suitable communications path 65.

Next, in response to receiving such a user selected enable card request from device 100, SMP 400 may attempt to retrieve encrypted information regarding the selected credential that may be suitable for communication by SMP 400 to financial institution subsystem 350. For example, at step 524' of process 500' of FIG. 7, SMP broker component 410 may pull specific data from the received enable card request (e.g., information indicative of the selected credential, the additional security information for the selected credential (e.g., the user provided CVV), etc.), as well as a security key for a communication path between SMP 400 and financial institution subsystem 350 (e.g., a primary network key for communication path 55 of FIG. 1), and SMP broker component 410 may then generate and transmit a "RewrapRequest" to SMP crypto services component 430 of SMP 400. Such a rewrap request may include the information indicative of the selected credential, the additional security information for the selected credential (e.g., the user provided CW), as well as the security key for communication path 55, which may be required for generating credential information suitable for communication by SMP 400 over communication path 55 to financial institution subsystem 350. Such a rewrap request generated by SMP broker component 410 may be transmitted by SMP broker component 410 to SMP crypto services component 430 as data 667 via communications path 495 of FIG. 4 using any suitable communications protocol over any suitable communications path type.

In response to receiving such a rewrap request, SMP crypto services component 430 may generate data for the selected credential that may be suitable for communication by SMP 400 over communication path 55 to financial institution subsystem 350. For example, at step 526` of process 500' of FIG. 7, SMP crypto services component 430 may pull specific data about the selected credential and the network identified in the received rewrap request (e.g., the hashed-version of the credential and its CVV, as well as the security key for communication path 55), access secure data more fully descriptive of the selected credential known by the commercial entity for its user accounts, and then may generate and transmit a "RewrapResponse" back to SMP broker component 410 of SMP 400. Such a rewrap response may include secure data for the selected credential encoded with the security key in a suitable manner for communication by SMP 400 over communication path 55 to financial institution subsystem 350. Such a rewrap response generated by SMP crypto services component 430 may be transmitted by SMP crypto services component 430 to SMP broker 410 as data 669 via communications path 495 of FIG. 4 using any suitable communications protocol over any suitable communications path type.

In response to receiving such a rewrap response from SMP crypto services component 430, an SSD may be created by SMP 400 (e.g., by SMP broker component 410) at step 533 (e.g., an identifier for an SSD of device 100 (e.g., an SSD 154 of NFC component 120) into which the credential is to be provisioned), which may be at least partially determined based on the secure element information determined at step 507 and/or based on an SSD identifier that may be provided by the "EnableCardRequest" of step 522'. Next, after step 533, steps 534-550 of process 500' of FIG. 7 may be substantially similar to or identical to steps 534-550 of process 500 of FIG. 5 as described above.

It is understood that the steps shown in process 500' of FIG. 7 are merely illustrative and that existing steps may be modified or omitted, additional steps may be added, and the order of certain steps may be altered. For example, at least a portion of a commercial entity fraud check (e.g., of steps 516/518) may be performed substantially concurrently with at least a portion of a financial entity fraud check (e.g., of steps 528'/530') on at least one of the same credentials, such that the results of both fraud checks for that credential may be received faster.

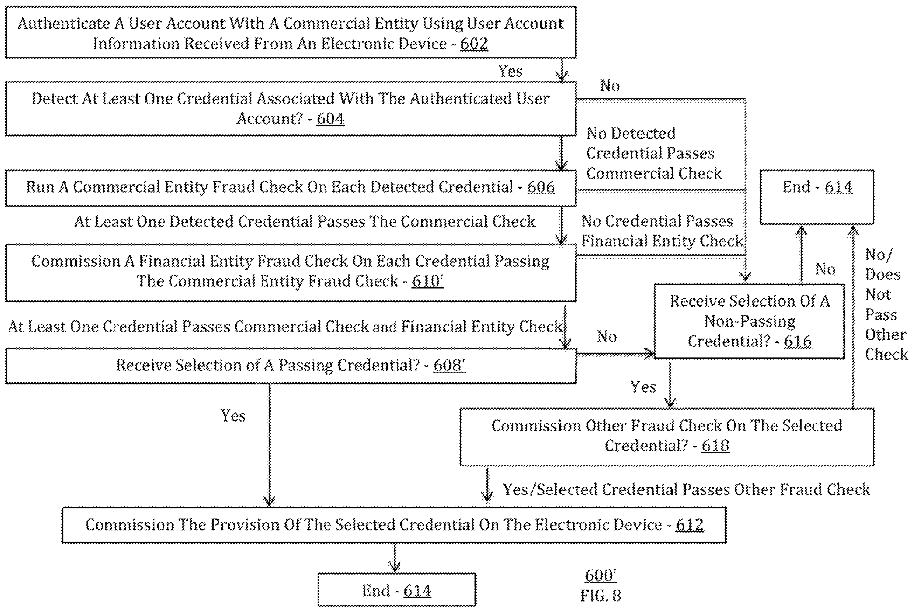

### Description of FIG. 8

FIG. 8 is a flowchart of an illustrative process 600' for provisioning a credential on an electronic device. Steps 602-606 of process 600' may be substantially similar to or identical to steps 602-606 of process 600 of FIG. 6. However, if at least one credential passes the commercial entity fraud check at step 606, process 600' of FIG. 8 may proceed to step 610', where a financial entity fraud check may be commissioned for each detected credential of step 604 or for at least each detected credential that passed the commercial entity fraud check of step 606. For example, SMP 400 may commission a financial entity fraud check on one or more credentials (e.g., SMP broker component 410 of SMP 400 may generate and transmit data 705 to financial institution subsystem 350 via communications path 55 of FIG. 1 using any suitable communications protocol over any suitable communications path type (e.g., via a TSM of communications path 55) for commissioning a financial entity fraud check on one or more credentials). Next, if at least one credential passes the financial entity fraud check of step 610', a selection of one of the passing credentials may be received at step 608' of process 600' of FIG. 8. For example, SMP 400 may receive a user selection of a passing credential from electronic device 100 (e.g., selection data 525 may be transmitted by device 100 to SMP 400 (e.g., to SMP broker component 410) via communications path 65 of FIG. 1). If a selection of a passing credential is received at step 608', process 600' of FIG. 8 may proceed to step 612, where the provisioning of the selected credential on the electronic device may be commissioned. For example, SMP 400 may commission the provisioning of a credential on an SSD 154 of NFC component 120 of electronic device 100, either directly from financial institution subsystem 350 to device 100 or at least partially via SMP 400. Process 600' may then proceed from step 612 to step 614 and end. However, process 600' of FIG. 8 may proceed to step 616 when no credential associated with the authenticated user account is detected at step 604, when no detected credential passes the commercial entity fraud check at step 606, when no credential passes the financial entity fraud check at step 610', or when no selection of a passing credential is received at step 608'. At step 616, a selection of a non-passing credential may be received. For example, SMP 400 may receive from electronic device 100 a user selection of another credential not associated with the user account (e.g., a selection of the "PROVISION NEW CREDENTIAL" option of screen 190b of FIG. 9B). If no selection of a non-passing credential is received at step 616 (e.g., a selection of the "CANCEL" option of screen 190b of FIG. 9B is received), process 600' may proceed to step 614 and end. However, if a selection of a non-passing credential is received at step 616, process 600' may proceed to step 618, where another fraud check may be commissioned for the selected credential. For example, a commercial entity fraud check and/or a financial entity fraud check may be commissioned for the selected credential. Alternatively or additionally, for example, SMP 400 may commission another fraud check that may require additional user interaction with device 100 to help bolster the confidence of system 1 that the selected non-passing credential ought to be provisioned (e.g., user responses to security questions and/or user receipt and acknowledgement of one-time passwords provided to device 100 by financial institution subsystem 350 and/or SMP 400 may be required in such instances). If no additional fraud check is commissioned or the selected non-passing credential does not pass the other fraud check at step 618, process 600' may proceed to step 614 and end. However, if the selected non-passing credential does pass the other fraud check at step 618, process 600' may proceed to step 612, where the provisioning of the selected credential on the electronic device may be commissioned. Process 600' may then proceed from step 612 to step 614 and end.

It is understood that the steps shown in process 600' of FIG. 8 are merely illustrative and that existing steps may be modified or omitted, additional steps may be added, and the order of certain steps may be altered.

### Further Description of FIG. 2 and FIG. 3

As mentioned, and as shown in FIG. 2, electronic device 100 can include, but is not limited to, a music player (e.g., an iPod^{™} available by Apple Inc. of Cupertino, California), video player, still image player, game player, other media player, music recorder, movie or video camera or recorder, still camera, other media recorder, radio, medical equipment, domestic appliance, transportation vehicle instrument, musical instrument, calculator, cellular telephone (e.g., an iPhone^{™} available by Apple Inc.), other wireless communication device, personal digital assistant, remote control, pager, computer (e.g., a desktop, laptop, tablet (e.g., an iPad^{™} available by Apple Inc.), server, etc.), monitor, television, stereo equipment, set up box, set-top box, boom box, modem, router, printer, or any combination thereof. In some embodiments, electronic device 100 may perform a single function (e.g., a device dedicated to conducting financial transactions) and, in other embodiments, electronic device 100 may perform multiple functions (e.g., a device that conducts financial transactions, plays music, and receives and transmits telephone calls). Electronic device 100 may be any portable, mobile, hand-held, or miniature electronic device that may be configured to conduct financial transactions wherever a user travels. Some miniature electronic devices may have a form factor that is smaller than that of hand-held electronic devices, such as an iPod^{™}. Illustrative miniature electronic devices can be integrated into various objects that may include, but are not limited to, watches, rings, necklaces, belts, accessories for belts, headsets, accessories for shoes, virtual reality devices, glasses, other wearable electronics, accessories for sporting equipment, accessories for fitness equipment, key chains, or any combination thereof. Alternatively, electronic device 100 may not be portable at all, but may instead be generally stationary.

As shown in FIG. 2, for example, electronic device 100 may include a processor 102, memory 104, communications component 106, power supply 108, input component 110, output component 112, antenna 116, and near field communication ("NFC") component 120. Electronic device 100 may also include a bus 118 that may provide one or more wired or wireless communication links or paths for transferring data and/or power to, from, or between various other components of device 100. In some embodiments, one or more components of electronic device 100 may be combined or omitted. Moreover, electronic device 100 may include other components not combined or included in FIG. 2. For example, electronic device 100 may include any other suitable components or several instances of the components shown in FIG. 2. For the sake of simplicity, only one of each of the components is shown in FIG. 2.

Memory 104 may include one or more storage mediums, including for example, a hard-drive, flash memory, permanent memory such as read-only memory ("ROM"), semi-permanent memory such as random access memory ("RAM"), any other suitable type of storage component, or any combination thereof. Memory 104 may include cache memory, which may be one or more different types of memory used for temporarily storing data for electronic device applications. Memory 104 may be fixedly embedded within electronic device 100 or may be incorporated on one or more suitable types of cards that may be repeatedly inserted into and removed from electronic device 100 (e.g., a subscriber identity module ("SIM") card or secure digital ("SD") memory card). Memory 104 may store media data (e.g., music and image files), software (e.g., for implementing functions on device 100), firmware, preference information (e.g., media playback preferences), lifestyle information (e.g., food preferences), exercise information (e.g., information obtained by exercise monitoring equipment), transaction information (e.g., information such as credit card information), wireless connection information (e.g., information that may enable device 100 to establish a wireless connection), subscription information (e.g., information that keeps track of podcasts or television shows or other media a user subscribes to), contact information (e.g., telephone numbers and e-mail addresses), calendar information, any other suitable data, or any combination thereof.

Communications component 106 may be provided to allow device 100 to communicate with one or more other electronic devices or servers or subsystems (e.g., one or more subsystems or other components of system 1) using any suitable communications protocol. For example, communications component 106 may support Wi-Fi (e.g., an 802.11 protocol), ZigBee (e.g., an 802.15.4 protocol), WiDi^{™}, Ethernet, Bluetooth^{™}, Bluetooth^{™} Low Energy ("BLE"), high frequency systems (e.g., 900 MHz, 2.4 GHz, and 5.6 GHz communication systems), infrared, transmission control protocol/internet protocol ("TCP/IP") (e.g., any of the protocols used in each of the TCP/IP layers), Stream Control Transmission Protocol ("SCTP"), Dynamic Host Configuration Protocol ("DHCP"), hypertext transfer protocol ("HTTP"), BitTorrent^{™}, file transfer protocol ("FTP"), real-time transport protocol ("RTP"), real-time streaming protocol ("RTSP"), real-time control protocol ("RTCP"), Remote Audio Output Protocol ("RAOP"), Real Data Transport Protocol^{™} ("RDTP"), User Datagram Protocol ("UDP"), secure shell protocol ("SSH"), wireless distribution system ("WDS") bridging, any communications protocol that may be used by wireless and cellular telephones and personal e-mail devices (e.g., Global System for Mobile Communications ("GSM"), GSM plus Enhanced Data rates for GSM Evolution ("EDGE"), Code Division Multiple Access ("CDMA"), Orthogonal Frequency-Division Multiple Access ("OFDMA"), high speed packet access ("HSPA"), multi-band, etc.), any communications protocol that may be used by a low power Wireless Personal Area Network ("6LoWPAN") module, any other communications protocol, or any combination thereof. Communications component 106 may also include or be electrically coupled to any suitable transceiver circuitry (e.g., transceiver circuitry or antenna 116 via bus 118) that can enable device 100 to be communicatively coupled to another device (e.g., a host computer or an accessory device) and communicate with that other device wirelessly, or via a wired connection (e.g., using a connector port). Communications component 106 may be configured to determine a geographical position of electronic device 100. For example, communications component 106 may utilize the global positioning system ("GPS") or a regional or site-wide positioning system that may use cell tower positioning technology or Wi-Fi technology.

Power supply 108 can include any suitable circuitry for receiving and/or generating power, and for providing such power to one or more of the other components of electronic device 100. For example, power supply 108 can be coupled to a power grid (e.g., when device 100 is not acting as a portable device or when a battery of the device is being charged at an electrical outlet with power generated by an electrical power plant). As another example, power supply 108 can be configured to generate power from a natural source (e.g., solar power using solar cells). As another example, power supply 108 can include one or more batteries for providing power (e.g., when device 100 is acting as a portable device). For example, power supply 108 can include one or more of a battery (e.g., a gel, nickel metal hydride, nickel cadmium, nickel hydrogen, lead acid, or lithium-ion battery), an uninterruptible or continuous power supply ("UPS" or "CPS"), and circuitry for processing power received from a power generation source (e.g., power generated by an electrical power plant and delivered to the user via an electrical socket or otherwise). The power can be provided by power supply 108 as alternating current or direct current, and may be processed to transform power or limit received power to particular characteristics. For example, the power can be transformed to or from direct current, and constrained to one or more values of average power, effective power, peak power, energy per pulse, voltage, current (e.g., measured in amperes), or any other characteristic of received power. Power supply 108 can be operative to request or provide particular amounts of power at different times, for example, based on the needs or requirements of electronic device 100 or periphery devices that may be coupled to electronic device 100 (e.g., to request more power when charging a battery than when the battery is already charged).

One or more input components 110 may be provided to permit a user to interact or interface with device 100. For example, input component 110 can take a variety of forms, including, but not limited to, a touch pad, dial, click wheel, scroll wheel, touch screen, one or more buttons (e.g., a keyboard), mouse, joy stick, track ball, microphone, camera, scanner (e.g., a bar code scanner or any other suitable scanner that may obtain product identifying information from a code, such as a bar code, a QR code, or the like), proximity sensor, light detector, motion sensor, biometric sensor (e.g., a fingerprint reader or other feature recognition sensor, which may operate in conjunction with a feature-processing application that may be accessible to electronic device 100 for authenticating a user), and combinations thereof. Each input component 110 can be configured to provide one or more dedicated control functions for making selections or issuing commands associated with operating device 100.

Electronic device 100 may also include one or more output components 112 that may present information (e.g., graphical, audible, and/or tactile information) to a user of device 100. For example, output component 112 of electronic device 100 may take various forms, including, but not limited to, audio speakers, headphones, audio line-outs, visual displays, antennas, infrared ports, haptic output components (e.g., rumblers, vibrators, etc.), or combinations thereof.

As a specific example, electronic device 100 may include a display output component as output component 112. Such a display output component may include any suitable type of display or interface for presenting visual data to a user. A display output component may include a display embedded in device 100 or coupled to device 100 (e.g., a removable display). A display output component may include, for example, a liquid crystal display ("LCD"), a light emitting diode ("LED") display, an organic light-emitting diode ("OLED") display, a surface-conduction electron-emitter display ("SED"), a carbon nanotube display, a nanocrystal display, any other suitable type of display, or combination thereof. Alternatively, a display output component can include a movable display or a projecting system for providing a display of content on a surface remote from electronic device 100, such as, for example, a video projector, a head-up display, or a three-dimensional (e.g., holographic) display. As another example, a display output component may include a digital or mechanical viewfinder, such as a viewfinder of the type found in compact digital cameras, reflex cameras, or any other suitable still or video camera. A display output component may include display driver circuitry, circuitry for driving display drivers, or both, and such a display output component can be operative to display content (e.g., media playback information, application screens for applications implemented on electronic device 100, information regarding ongoing communications operations, information regarding incoming communications requests, device operation screens, etc.) that may be under the direction of processor 102.

It should be noted that one or more input components and one or more output components may sometimes be referred to collectively herein as an input/output ("I/O") component or I/O interface (e.g., input component 110 and output component 112 as I/O component or I/O interface 114). For example, input component 110 and output component 112 may sometimes be a single I/O component 114, such as a touch screen, that may receive input information through a user's touch of a display screen and that may also provide visual information to a user via that same display screen.

Processor 102 of electronic device 100 may include any processing circuitry that may be operative to control the operations and performance of one or more components of electronic device 100. For example, processor 102 may receive input signals from input component 110 and/or drive output signals through output component 112. As shown in FIG. 2, processor 102 may be used to run one or more applications, such as an application 103. Application 103 may include, but is not limited to, one or more operating system applications, firmware applications, media playback applications, media editing applications, NFC low power mode applications, biometric feature-processing applications, or any other suitable applications. For example, processor 102 may load application 103 as a user interface program to determine how instructions or data received via an input component 110 or other component of device 100 may manipulate the way in which information may be stored and/or provided to the user via an output component 112. Application 103 may be accessed by processor 102 from any suitable source, such as from memory 104 (e.g., via bus 118) or from another device or server (e.g., via communications component 106). Processor 102 may include a single processor or multiple processors. For example, processor 102 may include at least one "general purpose" microprocessor, a combination of general and special purpose microprocessors, instruction set processors, graphics processors, video processors, and/or related chips sets, and/or special purpose microprocessors. Processor 102 also may include on board memory for caching purposes.

Electronic device 100 may also include near field communication ("NFC") component 120. NFC component 120 may be any suitable proximity-based communication mechanism that may enable contactless proximity-based transactions or communications 15 between electronic device 100 and terminal 200 (e.g., a merchant payment terminal). NFC component 120 may allow for close range communication at relatively low data rates (e.g., 424 kbps), and may comply with any suitable standards, such as ISO/IEC 7816, ISO/IEC 18092, ECMA-340, ISO/IEC 21481, ECMA-352, ISO 14443, and/or ISO 15693. Alternatively or additionally, NFC component 120 may allow for close range communication at relatively high data rates (e.g., 370 Mbps), and may comply with any suitable standards, such as the TransferJet^{™} protocol. Communication between NFC component 120 and terminal 200 may occur within any suitable close range distance between device 100 and terminal 200 (see, e.g., distance D of FIG. 1), such as a range of approximately 2 to 4 centimeters, and may operate at any suitable frequency (e.g., 13.56 MHz). For example, such close range communication of NFC component 120 may take place via magnetic field induction, which may allow NFC component 120 to communicate with other NFC devices and/or to retrieve information from tags having radio frequency identification ("RFID") circuitry. NFC component 120 may provide a manner of acquiring merchandise information, transferring payment information, and otherwise communicating with an external device (e.g., terminal 200).

NFC component 120 may include any suitable modules for enabling contactless proximity-based communication 15 between electronic device 100 and terminal 200. As shown in FIG. 2, for example, NFC component 120 may include an NFC device module 130, an NFC controller module 140, and an NFC memory module 150.

NFC device module 130 may include an NFC data module 132, an NFC antenna 134, and an NFC booster 136. NFC data module 132 may be configured to contain, route, or otherwise provide any suitable data that may be transmitted by NFC component 120 to terminal 200 as part of a contactless proximity-based or NFC communication 15. Additionally or alternatively, NFC data module 132 may be configured to contain, route, or otherwise receive any suitable data that may be received by NFC component 120 from terminal 200 as part of a contactless proximity-based communication 15.

NFC transceiver or NFC antenna 134 may be any suitable antenna or other suitable transceiver circuitry that may generally enable communication of communication 15 from NFC data module 132 to terminal 200 and/or to NFC data module 132 from terminal 200. Therefore, NFC antenna 134 (e.g., a loop antenna) may be provided specifically for enabling the contactless proximity-based communication capabilities of NFC component 120.

Alternatively or additionally, NFC component 120 may utilize the same transceiver circuitry or antenna (e.g., antenna 116) that another communication component of electronic device 100 (e.g., communication component 106) may utilize. For example, communication component 106 may leverage antenna 116 to enable Wi-Fi, Bluetooth^{™}, cellular, or GPS communication between electronic device 100 and another remote entity, while NFC component 120 may leverage antenna 116 to enable contactless proximity-based or NFC communication 15 between NFC data module 132 of NFC device module 130 and another entity (e.g., terminal 200). In such embodiments, NFC device module 130 may include NFC booster 136, which may be configured to provide appropriate signal amplification for data of NFC component 120 (e.g., data within NFC data module 132) so that such data may be appropriately transmitted by shared antenna 116 as communication 15 to terminal 200. For example, shared antenna 116 may require amplification from booster 136 before antenna 116 (e.g., a non-loop antenna) may be properly enabled for communicating contactless proximity-based or NFC communication 15 between electronic device 100 and terminal 200 (e.g., more power may be needed to transmit NFC data using antenna 116 than may be needed to transmit other types of data using antenna 116).

NFC controller module 140 may include at least one NFC processor module 142. NFC processor module 142 may operate in conjunction with NFC device module 130 to enable, activate, allow, and/or otherwise control NFC component 120 for communicating NFC communication 15 between electronic device 100 and terminal 200. NFC processor module 142 may exist as a separate component, may be integrated into another chipset, or may be integrated with processor 102, for example, as part of a system on a chip ("SoC"). As shown in FIG. 2, NFC processor module 142 of NFC controller module 140 may be used to run one or more applications, such as an NFC low power mode or wallet application 143 that may help dictate the function of NFC component 120. Application 143 may include, but is not limited to, one or more operating system applications, firmware applications, NFC low power applications, or any other suitable applications that may be accessible to NFC component 120 (e.g., application 103). NFC controller module 140 may include one or more protocols, such as the Near Field Communication Interface and Protocols ("NFCIP-1"), for communicating with another NFC device (e.g., terminal 200). The protocols may be used to adapt the communication speed and to designate one of the connected devices as the initiator device that controls the near field communication.

NFC controller module 140 may control the near field communication mode of NFC component 120. For example, NFC processor module 142 may be configured to switch NFC device module 130 between a reader/writer mode for reading information (e.g., communication 15) from NFC tags (e.g., from terminal 200) to NFC data module 132, a peer-to-peer mode for exchanging data (e.g., communication 15) with another NFC enabled device (e.g., terminal 200), and a card emulation mode for allowing another NFC enabled device (e.g., terminal 200) to read information (e.g., communication 15) from NFC data module 132. NFC controller module 140 also may be configured to switch NFC component 120 between active and passive modes. For example, NFC processor module 142 may be configured to switch NFC device module 130 (e.g., in conjunction with NFC antenna 134 or shared antenna 116) between an active mode where NFC device module 130 may generate its own RF field and a passive mode where NFC device module 130 may use load modulation to transfer data to another device generating an RF field (e.g., terminal 200). Operation in such a passive mode may prolong the battery life of electronic device 100 compared to operation in such an active mode. The modes of NFC device module 130 may be controlled based on preferences of a user and/or based on preferences of a manufacturer of device 100, which may be defined or otherwise dictated by an application running on device 100 (e.g., application 103 and/or application 143).

NFC memory module 150 may operate in conjunction with NFC device module 130 and/or NFC controller module 140 to allow for NFC communication 15 between electronic device 100 and terminal 200. NFC memory module 150 may be embedded within NFC device hardware or within an NFC integrated circuit ("IC"). NFC memory module 150 may be tamper resistant and may provide at least a portion of a secure element. For example, NFC memory module 150 may store one or more applications relating to NFC communications (e.g., application 143) that may be accessed by NFC controller module 140. For example, such applications may include financial payment applications, secure access system applications, loyalty card applications, and other applications, which may be encrypted. In some embodiments, NFC controller module 140 and NFC memory module 150 may independently or in combination provide a dedicated microprocessor system that may contain an operating system, memory, application environment, and security protocols intended to be used to store and execute sensitive applications on electronic device 100. NFC controller module 140 and NFC memory module 150 may independently or in combination provide at least a portion of a secure element, which may be tamper resistant. For example, such a secure element may be configured to provide a tamper-resistant platform (e.g., as a single or multiple chip secure microcontroller) that may be capable of securely hosting applications and their confidential and cryptographic data (e.g., applet 153 and key 155) in accordance with rules and security requirements that may be set forth by a set of well-identified trusted authorities (e.g., an authority of financial institution subsystem and/or an industry standard, such as GlobalPlatform). NFC memory module 150 may be a portion of memory 106 or at least one dedicated chip specific to NFC component 120. NFC memory module 150 may reside on a SIM, a dedicated chip on a motherboard of electronic device 100, or as an external plug in memory card. NFC memory module 150 may be completely independent from NFC controller module 140 and may be provided by different components of device 100 and/or provided to electronic device 100 by different removable subsystems.

NFC memory module 150 may include one or more of an issuer security domain ("ISD") 152 and a supplemental security domain ("SSD") 154 (e.g., a service provider security domain ("SPSD"), a trusted service manager security domain ("TSMSD"), etc.), which may be defined and managed by an NFC specification standard (e.g., GlobalPlatform). For example, ISD 152 may be a portion of NFC memory module 150 in which a trusted service manager ("TSM") or issuing financial institution may store keys and/or other suitable information for creating or otherwise provisioning one or more credentials (e.g., credentials associated with various credit cards, bank cards, gift cards, access cards, transit passes, etc.) on electronic device 100 (e.g., via communications component 106), for credential content management, and/or security domain management. A specific supplemental security domain ("SSD") 154 (e.g., one of SSDs 154-154b) may be associated with a specific credential (e.g., a specific credit card credential or a specific public transit card credential) that may provide specific privileges or payment rights to electronic device 100. Each SSD 154 may have its own manager key 155 for its own application or applet 153 that may need to be activated to enable a specific credential of that SSD 154 for use by NFC device module 130 as an NFC communication 15 between electronic device 100 and terminal 200. For example, a particular SSD 154 may be associated with a particular credit card credential. However, that particular credential may only be communicated as an NFC communication 15 to terminal 200 by NFC component 120 (e.g., that particular credential may only be accessible by NFC data module 132) when a particular applet 153 of that particular SSD 154 has been enabled or otherwise activated or unlocked for such use. Security features may be provided for enabling use of NFC component 120 that may be particularly useful when transmitting confidential payment information, such as credit card information or bank account information of a credential, from electronic device 100 to terminal 200 as NFC communication 15. Such security features also may include a secure storage area that may have restricted access. For example, user authentication via personal identification number ("PIN") entry or via user interaction with a biometric sensor may need to be provided to access the secure storage area. In certain embodiments, some or all of the security features may be stored within NFC memory module 150. Further, security information, such as an authentication key, for communicating with terminal 200 may be stored within NFC memory module 150. In certain embodiments, NFC memory module 150 may include a microcontroller embedded within electronic device 100.

While NFC component 120 has been described with respect to near field communication, it is to be understood that component 120 may be configured to provide any suitable contactless proximity-based mobile payment or any other suitable type of contactless proximity-based communication 15 between electronic device 100 and terminal 200. For example, NFC component 120 may be configured to provide any suitable short-range communication, such as those involving electromagnetic/electrostatic coupling technologies.

Electronic device 100 may also be provided with a housing 101 that may at least partially enclose one or more of the components of device 100 for protection from debris and other degrading forces external to device 100. In some embodiments, one or more of the components may be provided within its own housing (e.g., input component 110 may be an independent keyboard or mouse within its own housing that may wirelessly or through a wire communicate with processor 102, which may be provided within its own housing).

As mentioned, and as shown in FIG. 3, one specific example of electronic device 100 may be a handheld electronic device, such as an iPhone^{™}, where housing 101 may allow access to various input components 1 10a-1 10i, various output components 112a-112c, and various I/O components 114a-114d through which device 100 and a user and/or an ambient environment may interface with each other. Input component 110a may include a button that, when pressed, may cause a "home" screen or menu of a currently running application to be displayed by device 100. Input component 110b may be a button for toggling electronic device 100 between a sleep mode and a wake mode or between any other suitable modes. Input component 110c may include a two-position slider that may disable one or more output components 112 in certain modes of electronic device 100. Input components 110d and 1 10e may include buttons for increasing and decreasing the volume output or any other characteristic output of an output component 112 of electronic device 100. Each one of input components 1 10a-1 10e may be a mechanical input component, such as a button supported by a dome switch, a sliding switch, a control pad, a key, a knob, a scroll wheel, or any other suitable form.

An output component 112a may be a display that can be used to display a visual or graphic user interface ("GUI") 180, which may allow a user to interact with electronic device 100. GUI 180 may include various layers, windows, screens, templates, elements, menus, and/or other components of a currently running application (e.g., application 103 and/or application 143) that may be displayed in all or some of the areas of display output component 112a. For example, as shown in FIG. 3, GUI 180 may be configured to display a first screen 190. One or more of user input components 110a-110i may be used to navigate through GUI 180. For example, one user input component 110 may include a scroll wheel that may allow a user to select one or more graphical elements or icons 182 of GUI 180. Icons 182 may also be selected via a touch screen I/O component 114a that may include display output component 112a and an associated touch input component 110f. Such a touch screen I/O component 114a may employ any suitable type of touch screen input technology, such as, but not limited to, resistive, capacitive, infrared, surface acoustic wave, electromagnetic, or near field imaging. Furthermore, touch screen I/O component 114a may employ single point or multi-point (e.g., multi-touch) input sensing.

Icons 182 may represent various layers, windows, screens, templates, elements, and/or other components that may be displayed in some or all of the areas of display component 112a upon selection by the user. Furthermore, selection of a specific icon 182 may lead to a hierarchical navigation process. For example, selection of a specific icon 182 may lead to a new screen of GUI 180 that may include one or more additional icons or other GUI elements of the same application or of a new application associated with that icon 182. Textual indicators 181 may be displayed on or near each icon 182 to facilitate user interpretation of each graphical element icon 182. It is to be appreciated that GUI 180 may include various components arranged in hierarchical and/or non-hierarchical structures. When a specific icon 182 is selected, device 100 may be configured to open a new application associated with that icon 182 and display a corresponding screen of GUI 180 associated with that application. For example, when the specific icon 182 labeled with a "Setup Assistant" textual indicator 181 (i.e., specific icon 183) is selected, device 100 may launch or otherwise access a specific setup application and may display screens of a specific user interface that may include one or more tools or features for interacting with device 100 in a specific manner (see, e.g., FIGS. 9A-9D for specific examples of such displays of GUI 180 during a setup assistant application that may be used during provisioning of one or more credentials on electronic device 100). For each application, screens may be displayed on display output component 112a and may include various user interface elements. Additionally or alternatively, for each application, various other types of non-visual information may be provided to a user via various other output components 112 of device 100. The operations described with respect to FIGS. 9A-9D may be achieved with a wide variety of graphical elements and visual schemes. Therefore, the embodiments of FIGS. 3 and 9A-9D are not intended to be limited to the precise user interface conventions adopted herein. Rather, embodiments may include a wide variety of user interface styles.

Electronic device 100 also may include various other I/O components 114 that may allow for communication between device 100 and other devices. I/O component 114b may be a connection port that may be configured for transmitting and receiving data files, such as media files or customer order files, from a remote data source and/or power from an external power source. For example, I/O component 114b may be a proprietary port, such as a Lightning^{™} connector or a 30-pin dock connector from Apple Inc. of Cupertino, California. I/O component 114c may be a connection slot for receiving a SIM card or any other type of removable component. I/O component 114d may be a headphone jack for connecting audio headphones that may or may not include a microphone component. Electronic device 100 may also include at least one audio input component 110g, such as a microphone, and at least one audio output component 112b, such as an audio speaker.

Electronic device 100 may also include at least one haptic or tactile output component 112c (e.g., a rumbler), a camera and/or scanner input component 110h (e.g., a video or still camera, and/or a bar code scanner or any other suitable scanner that may obtain product identifying information from a code, such as a bar code, a QR code, or the like), and a biometric input component 110i (e.g., a fingerprint reader or other feature recognition sensor, which may operate in conjunction with a feature-processing application that may be accessible to electronic device 100 for authenticating a user). As shown in FIG. 3, at least a portion of biometric input component 110i may be incorporated into or otherwise combined with input component 110a or any other suitable input component 110 of device 100. For example, biometric input component 110i may be a fingerprint reader that may be configured to scan the fingerprint of a user's finger as the user interacts with mechanical input component 110a by pressing input component 110a with that finger. As another example, biometric input component 110i may be a fingerprint reader that may be combined with touch input component 110f of touch screen I/O component 114a, such that biometric input component 110i may be configured to scan the fingerprint of a user's finger as the user interacts with touch screen input component 110f by pressing or sliding along touch screen input component 110f with that finger. Moreover, as mentioned, electronic device 100 may further include NFC component 120, which may be communicatively accessible to terminal 200 via antenna 116 and/or antenna 134 (not shown in FIG. 3). NFC component 120 may be located at least partially within housing 101, and a mark or symbol 121 can be provided on the exterior of housing 101 that may identify the general location of one or more of the antennas associated with NFC component 120 (e.g., the general location of antenna 116 and/or antenna 134).

Moreover, one, some, or all of the processes described with respect to FIGS. 1-9D may each be implemented by software, but may also be implemented in hardware, firmware, or any combination of software, hardware, and firmware. Instructions for performing these processes may also be embodied as machine- or computer-readable code recorded on a machine- or computer-readable medium. In some embodiments, the computer-readable medium may be a non-transitory computer-readable medium. Examples of such a non-transitory computer-readable medium include but are not limited to a read-only memory, a random-access memory, a flash memory, a CD-ROM, a DVD, a magnetic tape, a removable memory card, and a data storage device (e.g., memory 104 and/or memory module 150 of FIG. 2). In other embodiments, the computer-readable medium may be a transitory computer-readable medium. In such embodiments, the transitory computer-readable medium can be distributed over network-coupled computer systems so that the computer-readable code is stored and executed in a distributed fashion. For example, such a transitory computer-readable medium may be communicated from one electronic device to another electronic device using any suitable communications protocol (e.g., the computer-readable medium may be communicated to electronic device 100 via communications component 106 (e.g., as at least a portion of application 103 and/or application 143)). Such a transitory computer-readable medium may embody computer-readable code, instructions, data structures, program modules, or other data in a modulated data signal, such as a carrier wave or other transport mechanism, and may include any information delivery media. A modulated data signal may be a signal that has one or more of its characteristics set or changed in such a manner as to encode information in the signal.

It is to be understood that any, each, or at least one module or component of system 1 may be provided as a software construct, firmware construct, one or more hardware components, or a combination thereof. For example, any, each, or at least one module or component of system 1 may be described in the general context of computer-executable instructions, such as program modules, that may be executed by one or more computers or other devices. Generally, a program module may include one or more routines, programs, objects, components, and/or data structures that may perform one or more particular tasks or that may implement one or more particular abstract data types. It is also to be understood that the number, configuration, functionality, and interconnection of the modules and components of system 1 are merely illustrative, and that the number, configuration, functionality, and interconnection of existing modules may be modified or omitted, additional modules may be added, and the interconnection of certain modules may be altered.

At least a portion of one or more of the modules or components of system 1 may be stored in or otherwise accessible to an entity of system 1 in any suitable manner (e.g., in memory 104 of device 100 (e.g., as at least a portion of application 103 and/or application 143)). For example, any or each module of NFC component 120 may be implemented using any suitable technologies (e.g., as one or more integrated circuit devices), and different modules may or may not be identical in structure, capabilities, and operation. Any or all of the modules or other components of system 1 may be mounted on an expansion card, mounted directly on a system motherboard, or integrated into a system chipset component (e.g., into a "north bridge" chip).

Any or each module or component of system 1 (e.g., any or each module of NFC component 120) may be a dedicated system implemented using one or more expansion cards adapted for various bus standards. For example, all of the modules may be mounted on different interconnected expansion cards or all of the modules may be mounted on one expansion card. With respect to NFC component 120, by way of example only, the modules of NFC component 120 may interface with a motherboard or processor 102 of device 100 through an expansion slot (e.g., a peripheral component interconnect ("PCI") slot or a PCI express slot). Alternatively, NFC component 120 need not be removable but may include one or more dedicated modules that may include memory (e.g., RAM) dedicated to the utilization of the module. In other embodiments, NFC component 120 may be integrated into device 100. For example, a module of NFC component 120 may utilize a portion of device memory 104 of device 100. Any or each module or component of system 1 (e.g., any or each module of NFC component 120) may include its own processing circuitry and/or memory. Alternatively, any or each module or component of system 1 (e.g., any or each module of NFC component 120) may share processing circuitry and/or memory with any other module of NFC component 120 and/or processor 102 and/or memory 104 of device 100.

As mentioned, an input component 110 of device 100 (e.g., input component 110f) may include a touch input component that can receive touch input for interacting with other components of device 100 via wired or wireless bus 118. Such a touch input component 110 may be used to provide user input to device 100 in lieu of or in combination with other input components, such as a keyboard, mouse, and the like.

A touch input component 110 may include a touch sensitive panel, which may be wholly or partially transparent, semitransparent, non-transparent, opaque, or any combination thereof. A touch input component 110 may be embodied as a touch screen, touch pad, a touch screen functioning as a touch pad (e.g., a touch screen replacing the touchpad of a laptop), a touch screen or touch pad combined or incorporated with any other input device (e.g., a touch screen or touch pad disposed on a keyboard), or any multi-dimensional object having a touch sensitive surface for receiving touch input. In some embodiments, the terms touch screen and touch pad may be used interchangeably.

In some embodiments, a touch input component 110 embodied as a touch screen may include a transparent and/or semitransparent touch sensitive panel partially or wholly positioned over, under, and/or within at least a portion of a display (e.g., display output component 112a). In other embodiments, a touch input component 110 may be embodied as an integrated touch screen where touch sensitive components/devices are integral with display components/devices. In still other embodiments, a touch input component 110 may be used as a supplemental or additional display screen for displaying supplemental or the same graphical data as a primary display and to receive touch input.

A touch input component 110 may be configured to detect the location of one or more touches or near touches based on capacitive, resistive, optical, acoustic, inductive, mechanical, chemical measurements, or any phenomena that can be measured with respect to the occurrences of the one or more touches or near touches in proximity to input component 110. Software, hardware, firmware, or any combination thereof may be used to process the measurements of the detected touches to identify and track one or more gestures. A gesture may correspond to stationary or non-stationary, single or multiple, touches or near touches on a touch input component 110. A gesture may be performed by moving one or more fingers or other objects in a particular manner on touch input component 110, such as by tapping, pressing, rocking, scrubbing, rotating, twisting, changing orientation, pressing with varying pressure, and the like at essentially the same time, contiguously, or consecutively. A gesture may be characterized by, but is not limited to, a pinching, pulling, sliding, swiping, rotating, flexing, dragging, or tapping motion between or with any other finger or fingers. A single gesture may be performed with one or more hands, by one or more users, or any combination thereof.

As mentioned, electronic device 100 may drive a display (e.g., display output component 112a) with graphical data to display a graphical user interface ("GUI") 180. GUI 180 may be configured to receive touch input via a touch input component 110f. Embodied as a touch screen (e.g., with display output component 112a as I/O component 114a), touch I/O component 110f may display GUI 180. Alternatively, GUI 180 may be displayed on a display (e.g., display output component 112a) separate from touch input component 110f. GUI 180 may include graphical elements displayed at particular locations within the interface. Graphical elements may include, but are not limited to, a variety of displayed virtual input devices, including virtual scroll wheels, a virtual keyboard, virtual knobs, virtual buttons, any virtual user interface ("UI"), and the like. A user may perform gestures at one or more particular locations on touch input component 110f, which may be associated with the graphical elements of GUI 180. In other embodiments, the user may perform gestures at one or more locations that are independent of the locations of graphical elements of GUI 180. Gestures performed on a touch input component 110 may directly or indirectly manipulate, control, modify, move, actuate, initiate, or generally affect graphical elements, such as cursors, icons, media files, lists, text, all or portions of images, or the like within the GUI. For instance, in the case of a touch screen, a user may directly interact with a graphical element by performing a gesture over the graphical element on the touch screen. Alternatively, a touch pad may generally provide indirect interaction. Gestures may also affect non-displayed GUI elements (e.g., causing user interfaces to appear) or may affect other actions of device 100 (e.g., affect a state or mode of a GUI, application, or operating system). Gestures may or may not be performed on a touch input component 110 in conjunction with a displayed cursor. For instance, in the case in which gestures are performed on a touchpad, a cursor or pointer may be displayed on a display screen or touch screen and the cursor or pointer may be controlled via touch input on the touchpad to interact with graphical objects on the display screen. In other embodiments, in which gestures are performed directly on a touch screen, a user may interact directly with objects on the touch screen, with or without a cursor or pointer being displayed on the touch screen. Feedback may be provided to the user via bus 118 in response to or based on the touch or near touches on a touch input component 110. Feedback may be transmitted optically, mechanically, electrically, olfactory, acoustically, or the like or any combination thereof and in a variable or non-variable manner.

### Further Applications of Described Concepts

While there have been described systems, methods, and computer-readable media for securely provisioning credentials on an electronic device, it is to be understood that many changes may be made therein without departing from the scope of the subject matter described herein in any way. Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

Therefore, those skilled in the art will appreciate that the invention can be practiced by other than the described embodiments, which are presented for purposes of illustration rather than of limitation.

## Claims

1. A method comprising:
communicating user account information to a commercial entity via a first communication component of an electronic device;
receiving, from the commercial entity via the first communication component and responsive to communicating the user account information, a list comprising at least one commerce credential associated with the user account information under control of the commercial entity, the at least one commerce credential having passed a commercial entity fraud check performed by the commercial entity and a financial entity fraud check commissioned by the commercial entity based on results of the commercial entity fraud check; and
transmitting a request to the commercial entity via the first communication component for initiating a credential provisioning process for provisioning, on the electronic device, of a credential corresponding to at least one of the at least one commerce credential associated with the user account information under the control of the commercial entity.

2. The method of claim 1, further comprising:
in response to receiving the list, presenting the list for selection; and
receiving a user selection of the at least one of the at least one commerce credential associated with the user account information under the control of the commercial entity.

3. The method of claim 1, further comprising:
detecting a presence of a contactless proximity-based communication component, wherein the request is transmitted to the commercial entity responsive to the detecting.

4. The method of claim 3, further comprising:
performing the credential provisioning process to provision the credential on the electronic device.

5. The method of claim 4, further comprising:
performing, via the contactless proximity-based communication component, a financial transaction with a merchant terminal using the provisioned credential.

6. The method of claim 1, further comprising:
receiving, via user input, account log-in information.

7. The method of claim 1, wherein the commercial entity fraud check comprises analyzing data indicative of a characteristic of the user account information.

8. The method of claim 7, wherein the data is indicative of at least one of the following:
whether the at least one commerce credential was used to purchase the electronic device;
a comparison of a current location of the electronic device and a first location associated with at least one of the at least one commerce credential and the user account information; or
a comparison of the location where the electronic device was purchased and a second location associated with at least one of the commerce credential and the user account information.

9. The method of claim 7, wherein the data is indicative of at least one of the following:
a duration of time between when the electronic device was purchased and when the commercial entity fraud check is run; or
another duration of time between when the electronic device was first turned on and when the commercial entity fraud check is run.

10. The method of claim 7, wherein the data indicative of the characteristic of the user account information is available to the commercial entity, and the credential corresponding to the at least one commerce credential comprises a virtual credential that is linked to the at least one commerce credential.

11. The method of claim 7, wherein:
the at least one commerce credential was issued by a financial institution subsystem;
the commercial entity is distinct and independent from the financial institution subsystem; and
at least a portion of the data is not available to the financial institution subsystem.

12. The method of claim 1, wherein the financial entity fraud check comprises analyzing other data that is available to a financial institution subsystem and at least a portion of the other data is not available to the commercial entity.

13. A computer program for instructing a computer to perform the method of any of claims 1-12.

14. A electronic device configured to perform the method of any of claims 1-12.

## Patentansprüche

1. Verfahren, umfassend:
Kommunizieren von Benutzerkontoinformation an eine kommerzielle Einheit über eine erste Kommunikationskomponente einer elektronischen Vorrichtung;
Empfangen, von der kommerziellen Einheit über die erste
Kommunikationskomponente und als Reaktion auf das Kommunizieren der Benutzerkontoinformation, einer Liste, die mindestens einen
Handelsberechtigungsnachweis umfasst, der mit der Benutzerkontoinformation unter Kontrolle der kommerziellen Einheit verknüpft ist, wobei der mindestens eine Handelsberechtigungsnachweis eine von der kommerziellen Einheit durchgeführte Betrugsprüfung der kommerziellen Einheit und eine von der kommerziellen Einheit basierend auf Ergebnissen der Betrugsprüfung der kommerziellen Einheit in Auftrag gegebene Betrugsprüfung der finanziellen Einheit bestanden hat; und
Übertragen einer Anforderung an die kommerzielle Einheit über die erste Kommunikationskomponente zum Initiieren eines
Berechtigungsnachweisbereitstellungsprozesses zum Bereitstellen, auf der elektronischen Vorrichtung, eines Berechtigungsnachweises, der mindestens einem des mindestens einen Handelsberechtigungsnachweises entspricht, der mit der Benutzerkontoinformation unter Kontrolle der kommerziellen Einheit verknüpft ist.

2. Verfahren nach Anspruch 1, ferner umfassend:
als Reaktion auf Empfangen der Liste, Präsentieren der Liste zur Auswahl; und
Empfangen einer Benutzerauswahl des mindestens einen des mindestens einen Handelsberechtigungsnachweises, der mit der Benutzerkontoinformation unter Kontrolle der kommerziellen Einheit verknüpft ist.

3. Verfahren nach Anspruch 1, ferner umfassend:
Detektieren eines Vorhandenseins einer kontaktlosen nähebasierten Kommunikationskomponente, wobei die Anforderung an die kommerzielle Einheit als Reaktion auf das Detektieren übertragen wird.

4. Verfahren nach Anspruch 3, ferner umfassend:
Durchführen des Berechtigungsnachweisbereitstellungsprozesses, um den Berechtigungsnachweis auf der elektronischen Vorrichtung bereitzustellen.

5. Verfahren nach Anspruch 4, ferner umfassend:
Durchführen, über die kontaktlose nähebasierte Kommunikationskomponente, einer Finanztransaktion mit einem Händlerterminal unter Verwendung des bereitgestellten Berechtigungsnachweises.

6. Verfahren nach Anspruch 1, ferner umfassend:
Empfangen, über Benutzereingabe, von Kontoanmeldeinformation.

7. Verfahren nach Anspruch 1, wobei die Betrugsprüfung der kommerziellen Einheit Analysieren von Daten umfasst, die ein Merkmal der Benutzerkontoinformation angeben.

8. Verfahren nach Anspruch 7, wobei die Daten mindestens eines der Folgenden angeben:
ob der mindestens eine Handelsberechtigungsnachweis verwendet wurde, um die elektronische Vorrichtung zu kaufen;
einen Vergleich eines aktuellen Standorts der elektronischen Vorrichtung und eines ersten Standorts, der mit mindestens einem des mindestens einen Handelsberechtigungsnachweises und der Benutzerkontoinformation assoziiert ist; oder
einen Vergleich des Standorts, an dem die elektronische Vorrichtung gekauft wurde, und eines zweiten Standorts, der mit mindestens einem des
Handelsberechtigungsnachweises und der Benutzerkontoinformation assoziiert ist.

9. Verfahren nach Anspruch 7, wobei die Daten mindestens eines der Folgenden angeben:
eine Zeitdauer zwischen dem Zeitpunkt, an dem die elektronische Vorrichtung gekauft wurde, und dem Zeitpunkt, an dem die Betrugsprüfung der kommerziellen Einheit ausgeführt wird; oder
eine andere Zeitdauer zwischen dem Zeitpunkt, an dem die elektronische Vorrichtung zum ersten Mal eingeschaltet wurde, und dem Zeitpunkt, an dem die Betrugsprüfung der kommerziellen Einheit ausgeführt wird.

10. Verfahren nach Anspruch 7, wobei die Daten, die das Merkmal der Benutzerkontoinformation angeben, für die kommerzielle Einheit verfügbar sind, und der Berechtigungsnachweis, der dem mindestens einen Handelsberechtigungsnachweis entspricht, einen virtuellen Berechtigungsnachweis umfasst, der mit dem mindestens einen Handelsberechtigungsnachweis verknüpft ist.

11. Verfahren nach Anspruch 7, wobei:
der mindestens eine Handelsberechtigungsnachweis von einem Finanzinstitut-Subsystem ausgegeben wurde;
die kommerzielle Einheit von dem Finanzinstitut-Subsystem verschieden und unabhängig ist; und
mindestens ein Teil der Daten für das Finanzinstitut-Subsystem nicht verfügbar ist.

12. Verfahren nach Anspruch 1, wobei die Betrugsprüfung der kommerziellen Einheit Analysieren anderer Daten umfasst, die für ein Finanzinstitut-Subsystem verfügbar sind, und mindestens ein Teil der anderen Daten für die kommerzielle Einheit nicht verfügbar ist.

13. Computerprogramm zum Anweisen eines Computers, das Verfahren nach einem der Ansprüche 1-12 durchzuführen.

14. Elektronische Vorrichtung, die konfiguriert ist, um das Verfahren nach einem der Ansprüche 1-12 durchzuführen.

## Revendications

1. Un procédé comprenant :
la communication d'une information de compte utilisateur à une entité commerciale via un premier composant de communication d'un dispositif électronique ;
la réception, en provenance de l'entité commerciale via le premier composant de communication et en réponse à la communication de l'information de compte utilisateur, d'une liste comprenant au moins une accréditation de commerce associée à l'information de compte utilisateur sous le contrôle de l'entité commerciale, l'au moins une accréditation de commerce ayant passé avec succès un contrôle antifraude d'entité commerciale effectué par l'entité commerciale et un contrôle antifraude d'entité financière à la demande de l'entité commerciale sur la base des résultats du contrôle antifraude d'entité commerciale ; et
la transmission à l'entité commerciale d'une requête via le premier composant de communication pour déclencher un processus de provisionnement d'accréditation pour provisionner, sur le dispositif électronique, une accréditation correspondant à au moins l'une de l'au moins une accréditation de commerce associée à l'information de compte utilisateur sous le contrôle de l'entité commerciale.

2. Le procédé de la revendication 1, comprenant en outre :
en réponse à la réception de la liste, la présentation de la liste pour sélection ; et
la réception d'une sélection utilisateur de l'au moins une de l'au moins une accréditation de commerce associée à l'information de compte utilisateur sous le contrôle de l'entité commerciale.

3. Le procédé de la revendication 1, comprenant en outre :
la détection d'une présence d'un composant de communication sans contact basée sur la proximité, la requête étant transmise à l'entité commerciale en réponse à la détection.

4. Le procédé de la revendication 3, comprenant en outre :
l'exécution du processus de provisionnement d'accréditation pour provisionner l'accréditation sur le dispositif électronique.

5. Le procédé de la revendication 4, comprenant en outre :
l'exécution, via le composant de communication sans contact basée sur la proximité, d'une transaction financière avec un terminal de commerçant en utilisant l'accréditation provisionnée.

6. Le procédé de la revendication 1, comprenant en outre :
la réception, via une entrée utilisateur, d'une information de login de compte.

7. Le procédé de la revendication 1, dans lequel le contrôle antifraude d'entité commerciale comprend l'analyse de données représentatives d'une caractéristique de l'information de compte utilisateur.

8. Le procédé de la revendication 7, dans lequel les données sont représentatives d'au moins une parmi :
l'utilisation ou non de l'au moins une entité de commerce pour acheter le dispositif électronique ;
une comparaison de l'emplacement courant du dispositif électronique avec un premier emplacement associé à au moins l'une de l'au moins une accréditation de commerce et l'information de compte utilisateur ; ou
une comparaison de l'emplacement où le dispositif électronique a été acheté avec un second emplacement associé à au moins une parmi l'accréditation de commerce et l'information de compte utilisateur.

9. Le procédé de la revendication 7, dans lequel les données sont représentatives d'au moins une parmi :
une durée entre le moment où le dispositif électronique a été acheté et le moment où le contrôle antifraude d'entité commerciale a été exécuté ; ou
une autre durée entre le moment où le dispositif électronique a été allumé pour la première fois et le moment où le contrôle antifraude d'entité commerciale a été exécuté.

10. Le procédé de la revendication 7, dans lequel les données représentatives de la caractéristique de l'information de compte utilisateur sont disponibles pour l'entité commerciale, et l'accréditation correspondant à l'au moins une accréditation de commerce comprend une accréditation virtuelle qui est liée à l'au moins une accréditation de commerce.

11. Le procédé de la revendication 7, dans lequel :
l'au moins une accréditation de commerce avait été délivrée par un sous-système d'institution financière ;
l'entité commerciale est distincte et indépendante du sous-système d'institution financière ; et
au moins une partie des données ne sont pas disponibles pour le sous-système d'institution financière.

12. Le procédé de la revendication 1, dans lequel le contrôle antifraude d'entité financière comprend l'analyse d'autres données qui sont disponibles pour un sous-système d'institution financière, et au moins une partie des autres données ne sont pas disponibles à l'entité commerciale.

13. Un programme informatique pour donner instruction à un calculateur de mettre en œuvre le procédé de l'une des revendications 1 à 12.

14. Un dispositif électronique configuré pour mettre en œuvre le procédé de l'une des revendications 1 à 12.
